(19) Europäisches Patentamt
European Patent Office
Office européen des brevets

(11) **EP 2 643 363 B1**

(12) **EUROPÄISCHE PATENTSCHRIFT**

(45) Veröffentlichungstag und Bekanntmachung des Hinweises auf die Patenterteilung:
**31.05.2017 Patentblatt 2017/22**

(51) Int Cl.:
***C08F 126/06*** (2006.01)

(21) Anmeldenummer: **11843266.5**

(22) Anmeldetag: **21.11.2011**

(86) Internationale Anmeldenummer:
**PCT/IB2011/055201**

(87) Internationale Veröffentlichungsnummer:
**WO 2012/069975 (31.05.2012 Gazette 2012/22)**

(54) **VERFAHREN ZUR HERSTELLUNG VON PEROXIDARMEM VERNETZTEM VINYLLACTAM-POLYMER**

PROCESS FOR THE PREPARATION OF LOW-PEROXIDE CROSSLINKED VINYLLACTAM POLYMER

PROCÉDÉ POUR PRODUIRE DES POLYMÈRES VINYLLACTAME RÉTICULÉS PAUVRES EN PEROXYDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2010 EP 10192173**
**23.11.2010 US 416311 P**

(43) Veröffentlichungstag der Anmeldung:
**02.10.2013 Patentblatt 2013/40**

(73) Patentinhaber: **BASF SE**
**67056 Ludwigshafen am Rhein (DE)**

(72) Erfinder:
• FISCHER, Frank
67281 Kirchheim (DE)
• BOHRER, Erik
67133 Maxdorf (DE)
• MASCHKE, Angelika
68159 Mannheim (DE)
• KOLTER, Karl
67117 Limburgerhof (DE)
• KERBER, Michael
69469 Weinheim (DE)

(74) Vertreter: **BASF IP Association**
**BASF SE**
**G-FLP-C006**
**67056 Ludwigshafen (DE)**

(56) Entgegenhaltungen:
EP-A1- 1 950 230        WO-A1-02/32975
WO-A1-2010/072640    CN-A- 1 163 900
CN-A- 1 208 056         CN-A- 1 271 739
CN-A- 101 230 180      DE-A1- 10 019 470
US-B1- 6 331 333

**Beschreibung**

Die vorliegende Erfindung betrifft ein Verfahren zur Herstellung von peroxidarmem vernetztem Vinyllactam-Polymer durch radikalische Polymerisation in Gegenwart von mindestens einer als Antioxidans wirkenden organischen Substanz sowie peroxidarmes vernetztes Vinyllactam-Polymer erhältlich nach diesem Verfahren und dessen Verwendung.

Viele oxidationsempfindliche Polymere wie vernetzte und unvernetzte Homo- und Copolymere des N-Vinylpyrrolidons werden üblicherweise nach ihrer Polymerisation durch Sprühtrocknung oder Walzentrocknung oder einer anderen Warmlufttrocknung in rieselfähige Pulver überführt. Bei diesen Prozessen bilden sich durch den intensiven Luftkontakt und die Wärme Spuren von Peroxiden, deren Gehalt im Laufe der darauffolgenden Verpackung, Lagerung und Handhabung noch weiter zunimmt. Diese Neigung zur Peroxidbildung kann bei der Verwendung von Polymeren wie Polyvinylpyrrolidon (PVP und PVPP) in pharmazeutischen Zubereitungen Probleme bereiten. In den gültigen Pharmakopöen, z.B. Ph. Eur. 6 und JP XIV, ist der Peroxidgehalt für diese Polymere auf maximal 400 ppm limitiert. Durch Trocknung unter Luftausschluss, Lagerung bei tiefen Temperaturen und/oder die hermetisch dichte Verpackung unter Vakuum oder einem Inertgas kann zwar die Kinetik der Peroxidbildung verlangsamt, nicht aber verhindert werden. Ferner sind diese Verfahren mit einem sehr hohen Aufwand verbunden, so dass die Akzeptanz derartiger Maßnahmen durch die Verwender gering ist.
Darüber hinaus besteht der Wunsch der Pharmahersteller, Polymere mit noch geringeren Peroxidmengen zu erhalten, etwa nicht mehr als 100 oder gar nicht mehr als 50 ppm, wobei diese Werte dann auch noch bei einer möglichst langen Lagerdauer sicher unterschritten werden sollen.

Bühler schreibt in seinem Buch "Polyvinylpyrrolidone - Excipients for Pharmaceuticals", Springer, 2005, Seiten 33 und 34, dass alle Typen von Povidonen und Crospovidonen ("Povidon" ist der generische Name für lösliches Polyvinylpyrrolidon (PVP) im Bereich Pharma; "Crospovidon" der generische Name für wasserunlöslich vernetztes PVP, das auch als PVPP und Polyvinylpyrrolidon-Popcorn-Polymer bezeichnet) einen messbaren Zuwachs des Peroxidgehalts bei Lagerung in Gegenwart von Luftsauerstoff aufweisen. Dieser Zuwachs sei besonders stark für das Povidon mit K-Wert 90. Deshalb sei es ratsam, Produkte dieser K-Werte bei niedrigen Temperaturen und/oder hermetisch eingeschweißt in Aluminium-Polyethylen Zweifachschicht-Foliensäcken unter Stickstoffatmosphäre zu lagern. Dennoch kann dadurch laut Bühler der weitere Anstieg der Peroxidgehalte nur verlangsamt aber nicht gestoppt werden.

Solche Aluminium-Polyethylen-Mehrschicht-Foliensäcke sind zudem sehr teuer, und die Aluminium-Schicht kann leicht beschädigt werden, wodurch sie den Schutzeffekt gegenüber Eindringen von Sauerstoff weitgehend verliert.

Bühler berichtet ebenso über die Farbveränderung bei wässrigen Lösungen von PVP insbesondere nach Lagerung oder Erwärmen, etwa bei der Sterilisierung: Die entstehende gelbe bis braungelbe Färbung resultiere aus der Oxidation mittels Luftsauerstoff. Dies kann laut Bühler durch Zusatz von geeigneten Antioxidantien zum Polymer (nach dessen Polymerisation) vermieden werden. Bühler nennt als solche Antioxidantien Cystein und Natriumsulfit.

Nachteilig am Zusatz solcher Antioxidantien ist jedoch, dass die schon aus der Polymerisation stammenden sowie direkt danach entstehenden Peroxide eine größere Menge der Antioxidantien bereits bei Zugabe zum Polymer aufbrauchen und so den Schutz und die Dauer der Lagerzeit verringern. Zur Kompensation müssten daher größere Mengen an Antioxidans eingesetzt werden.

Die Oxidationsempfindlichkeit von Polymeren wie PVP, die makroskopisch sicht- und messbaren Auswirkungen der Oxidation sowie vorgeschlagene Massnahmen zur Eindämmung und Hemmung der Oxidation ist in vielen Veröffentlichungen beschrieben worden (siehe beispielsweise Bühler in oben aufgeführter Veröffentlichung; Kline in Modern Plastics, 1945, November, ab Seite 157; Peniche et al. in Journal of Applied Polymer Science Vol. 50, Seiten 485-493, 1993; EP-B 873 130; US 6,331,333; Encina et al. im Journal of Polymer Science: Polymer Letters Edition, Vol. 18, Seiten 757 bis 760).
So beschreibt die US 6,498,231 B2 den Zusatz von Antioxidantien zum fertig hergestellten Polymer.

Aus der EP 1263813 B1 ist ein Verfahren zur Popcornpolymerisation unter Einstellung der Teilchengröße der Popcornpolymere mittels Durchleiten eines Inertgasstroms und/oder Zusatz von Reduktionsmittel bekannt. Dabei kann optional ein Reduktionsmittel zugesetzt werden in Mengen von 0,1 bis 1 Gewichtsprozent bezogen auf die Monomermischung zur Erreichung der völligen Sauerstofffreiheit im Reaktionsgemisch. Beschrieben werden als Reduktionsmittel Natriumsulfit, Natriumpyrosulfit, Natriumdithionit, Ascorbinsäure oder Mischungen der Reduktionsmittel. In den Beispielen eingesetzt wurde Natriumdithionit in einer Mengen von $2,2*(10 \text{ hoch } -7)$ bis 1,9 Gewichtsprozent bezogen auf die Monomermischung.
Eine Reduktion des Peroxidgehaltes oder eine Stabilisierung gegen Peroxidaufbau wird weder als Ziel genannt noch ansonsten als solche in der gesamten Schrift erwähnt.

Aus US 2821519 ist ein Verfahren zur Stabilisierung von PVP bekannt mittels Zusatz von Hydrazin und dessen Derivaten.
Hydrazine sind jedoch toxikologisch bedenklich und in N-Vinylpyrrolidon-Homo- und Copolymeren und Polymeren von N-Vinylpyrrolidon-Derivaten unerwünscht.

In der EP-B 1 083 884 ist ein Verfahren zur Stabilisierung von Polyvinylpyrrolidonen gegen Peroxid-Bildung beschrieben, bei dem wässrige Lösungen der Polymeren mit sehr geringen Mengen von Schwermetallsalzen oder mit Peroxid-spaltenden Enzymen versetzt werden. Diese verbleiben im Produkt. Geeignete Schwermetalle sind Mangan, Zink, Kobalt und insbesondere Kupfer.

Der Einsatz der vorgeschlagenen Schwermetalle ist jedoch wegen möglicher Akkumulierung im Körper von Nachteil. Der Einsatz von Enzymen ist vor allem aus Kosten- und Stabilitätsgründen nachteilig.

Aus der GB 836,831 ist ein Verfahren zur Stabilisierung von Polyvinylpyrrolidonen gegen Verfärbungen bekannt, bei dem Lösungen der Polymeren mit Schwefeldioxid, schwefliger Säure oder Alkalimetallsulfiten behandelt werden.

Aus der DE-A 10 2005 005 974 ist bekannt, dass bei dem aus GB 836,831 bekannten Verfahren der Peroxid-Aufbau nach Lagerung sogar in stärkerem Maße auftritt als bei unbehandelten Polymeren. DE-A 10 2005 005 974 offenbart daher ein Verfahren, wobei die Polyvinylpyrrolidone zunächst mit Schwefeldioxid, schwefliger Säure oder deren Alkalimetallsalzen und anschließend mit einem Radikalfänger behandelt werden.

Allerdings führt dieses Verfahren nicht bei allen Polymeren zu den gewünschten dauerhaften Effekten. Beispielsweise sind Farbe und Geruch und Peroxidgehalt nicht immer dauerhaft befriedigend.

Aus WO 2010/072640 ist ein Verfahren zur Herstellung von peroxidarmem Polymer umfassend das Behandeln des Polymeren mit elementarem Metall in Gegenwart einer Flüssigkeit bekannt sowie ein Polymer erhältlich nach dem erfindungsgemäßen Verfahren mit einem Peroxid-Gehalt von weniger als 20 ppm bezogen auf den Polymerfestgehalt, wobei der Peroxid-Gehalt zwei Tage nach der Behandlung ermittelt wird mittels Iodometrie gemäß Ph.Eur. 6, und das Polymer nicht mehr als 5 ppm bezogen auf den Polymerfestgehalt je edlem Metall und nicht mehr als 1000 ppm bezogen auf den Polymerfestgehalt je unedlem Metall aufweist.

Eingesetzt werden Alkalimetalle, die sich unter Wasserstoffbildung in der Polymerlösung oder Suspension auflösen oder Edelmetalle und gasförmiger Wasserstoff, der über diese Edelmetalle geleitet wird. Der Wasserstoff soll dabei die Peroxide reduzieren.

Die Verwendung von gasförmigen Wasserstoff und/oder mit Wasser reaktive, Wasserstoffbildende Metalle, ist im großtechnischen Betrieb ein nicht zu unterschätzendes Sicherheitsrisiko und bedeutet daher höhere Kosten.

Antioxidantien sind dem Fachmann in allen Bereichen der Polymerchemie hinlänglich bekannt. Üblicherweise werden daher Antioxidantien zu oxidationsempfindlichen Stoffen zugesetzt, um diese vor einer weiteren Oxidation etwa durch Luftsauerstoff zu schützen (siehe etwa R.E.King III. "Antioxidants (Overview)" and S. Al-Malaika "Antioxidants and Stabilizers" in Polymeric Materials Encyclopedia, Volume 1, Edt. J.C. Salamone, 1996).

Ein solches Vorgehen ist beispielsweise in der DE10019470 beschrieben für die Stabilisierung von Polyvinylpyrrolidonen. Dabei werden Antioxidantien nach der Polymerisation oder einer der Polymerisation nachfolgenden Nachbehandlung und vor gegebenenfalls einer Trocknung zu Polymerpulvern zugegeben und eingemischt. Die dafür benötigten Mengen werden angegeben zu 0,00001 bis 30 Gewichtsprozent bezogen auf den Polymerfestgehalt. Konkret genannte Einsatzmengen in den Beispielen sind 0,1 Gew.% Hydrochinon sowie 0,5 und 1 Gewichtsprozent eines anderen Antioxidans jeweils bezogen auf den Polymerfestgehalt.

Diesem Verfahren und allen Beispielen dazu gemein ist, dass das Antioxidans jeweils zur Lösung eines fertigen Polymers, das heißt nach der Beendigung der Polymerisation oder nach einer eventuellen Nachbehandlung des Polymers zugegeben werden.

Nachteilig an den genannten und konkret verwendeten Substanzen aus der DE10019470 ist, dass die meisten entweder nicht pharmatauglich oder nur sehr eingeschränkt pharmatauglich sind. Darüber hinaus verursachen Etliche Geruch nach Schwefel oder reagieren gar mit üblichen Arzneiwirkstoffen.

Ebenso erreichen diese Substanzen keine ausreichende Absenkung des Peroxidgehaltes. Insbesondere ist keine oder eine nur ungenügende Absenkung der Peroxidwerte bei vernetzten, wasserunlöslichen Polymeren erreichbar.

Aus US 7786233 B2 ist eine Polyvinylpyrrolidon-Zusammensetzung mit definierten Eigenschaften bekannt. Dabei wird zur Erreichung einer höheren Produktstabilität beim Erhitzen vor, während oder nach der pH-Einstellung, die nach der sauren Hydrolyse, die ihrerseits nach Ende der Polymerisation und Nachpolymerisation durchgeführt wird, ein Antioxidans zugesetzt. Peroxidgehalte wurden nicht bestimmt. Vernetzte Polymere wie insbesondere Popcornpolymere sowie Copolymere von Vinlypyrrolidon werden wie auch andere Vinyllactam-Polymere nicht erwähnt.

Gemäß aller dem Fachmann bekannten Vorgehensweisen werden demnach Antioxidantien zu dem zu schützenden Stoff, etwa einem Polymer, erst nach dessen Herstellung, zugegeben. Die Zugabe erfolgt nach den Veröffentlichungen des Stands der Technik also zu einem Zeitpunkt, zu dem die Polymerisation und die eventuell vorgesehene Nachpolymerisation und Nachbehandlung abgeschlossen sind. Zu diesem Zeitpunkt liegen also keine nicht-polymerisierten Monomere oder nur noch sehr geringe Restgehalte, üblicherweise deutlich weniger als 5 Gew.% bezogen auf die Gesamtmenge an eingesetzten Monomeren, vor. Ist festes Polymer gewünscht, so erfolgt die Zugabe des Antioxidans gemäß des Standes der Technik meist unmittelbar vor der Trocknung.

US 7786233 B2 offenbart als einzige bekannte Veröffentlichung die Zugabe von Antioxidans bereits vor, während oder nach der Polymerisation. Allerdings führt die Schrift das Vorgehen zu "vor" und "während" mit keinem weiteren Wort aus und offenbart auch keine Beispiele dazu.

Die im Rahmen dieser Erfindung als Antioxidans wirkende organische Substanz dient gemäß dem Stand der Technik zum Schutz oxidationsempfindlicher Stoffe vor Oxidation. Es reagiert daher mit Sauerstoff sowie anderen Radikalen und bildet Reaktionsprodukte. Dabei wird das Antioxidans "verbraucht" durch Reaktion mit den Radikalen, wodurch sich die Menge an unverbrauchtem Antioxidans stetig weiter verringert und damit auch der Schutz vor Oxidation verringert wird.

Aufgrund dieser Angaben im Stand der Technik und der Erfahrung des Fachmannes war zur erwarten, dass die im Rahmen dieser Erfindung verwendete, als Antioxidans wirkende organische Substanz die radikalische Polymerisation stören würde: So sollte beispielsweise das Antioxidans bereits zu Beginn der radikalischen Polymerisation mit den dort vorliegenden Radikalen, die die Polymerisation bewirken, reagieren. Somit würde aber zum einen die radikalische Polymerisation gestört als auch die Schutzwirkung durch das Antioxidans vermindert werden. Durch die Reaktion der Radikale mit Antioxidans würden weiterhin unerwünschte Nebenkomponenten entstehen.

Aufgabe der vorliegenden Erfindung war es, ein verbessertes Verfahren zur Stabilisierung von vernetzten Polymeren gegen Peroxid-Bildung zu finden, welches Produkte liefert, die geringe bis keine Peroxidgehalte aufweisen. Darüberhinaus sollten deren Peroxidgehalte auch beim Lagern in sauerstoffhaltiger Umgebung wie Luft nicht oder nur geringfügig ansteigen und einen gewissen Wert innerhalb einer bestimmten Zeit nicht überschreiten. Diese Stabilisierung sollte erreicht werden, ohne jedoch die Produkte mit Substanzen zu verunreinigen, die insbesondere für Pharma und Lebensmittelanwendungen bereits in kleinen Mengen prohibitiv sind. Ebenso sollte das Gefährdungspotential von reaktiven Metallen und gasförmigem Wasserstoff als Einsatzstoffe bei der Produktion vermieden werden.

Ein weiteres Ziel war, dass die erhaltenen Polymere geeignet sein sollten für den Kontakt mit dem menschlichen und/oder tierischen Körper sowie dessen Flüssigkeiten. Insbesondere sollten die erhaltenen Polymere möglichst uneingeschränkt pharmatauglich sein einschließlich oraler oder intravenöser Aufnahme in den menschlichen und/oder tierischen Körper. Ebenso sollte der Kontakt mit Lebensmitteln oder Pflanzen, die zur Ernährung dienen oder direkt oder in verarbeiteter Form mit Tieren und/oder dem Menschen in Kontakt kommen, beispielsweise als Lebens- oder Futtermittel, uneingeschränkt möglich sein.

Demgemäß wurde ein Verfahren zur Herstellung von peroxidarmem vernetztem Vinyllactam-Polymer durch radikalische Polymerisation in Gegenwart von mindestens einer als Antioxidans wirkenden organischen Substanz gefunden.

Insbesondere wurde ein Verfahren zur Herstellung von peroxidarmem wasserunlöslich vernetztem Vinyllactam-Polymer durch radikalische Polymerisation in Gegenwart von mindestens einer als Antioxidans wirkenden organischen Substanz gefunden.

Insbesondere wurde ein Verfahren zur Herstellung von peroxidarmem wasserunlöslich vernetztem Polyvinylpyrrolidon durch proliferierende Polymerisation in Gegenwart von mindestens einer als Antioxidans wirkenden organischen Substanz gefunden.

Weiterhin gefunden wurde ein peroxidarmes vernetztes Vinyllactam-Polymer, bevorzugt ein wasserunlöslich vernetztes Vinyllactam-Polymer und besonders bevorzugt wasserunlöslich vernetztes Polyvinylpyrrolidon, erhältlich nach dem gefundenen Verfahren.

Die dabei erhältlichen Vinyllactam-Polymere enthalten Antioxidans, das bereits während der radikalischen Polymerisation zugegen war. Bevorzugtes Antioxidans ist ausgewählt aus der Gruppe der Tocopherole. Die erhältlichen Vinyllactam-Polymer weisen dabei jeweils bezogen auf den Polymerfestgehalt einen Peroxid-Gehalt bestimmt zwei Tage nach Herstellung von nicht mehr als 50 ppm, bevorzugt nicht mehr als 20 ppm und besonders bevorzugt von nicht mehr als 10 ppm und/oder einen Peroxid-Gehalt bestimmt zu einem beliebigen Zeitpunkt innerhalb von bis zu drei Monaten nach Herstellung von nicht mehr als 100 ppm, bevorzugt nicht mehr als 50 ppm, besonders bevorzugt nicht mehr als 20 ppm und ganz besonders bevorzugt nicht mehr als 10 ppm wie beispielsweise nicht mehr als 1 ppm auf. Die Ermittlung des Peroxid-Gehalts erfolgt dabei mittels Iodometrie gemäß Ph.Eur. 6. Ferner weist das erhältliche Vinyllactam-Polymer Restmonomergehalte je eingesetztem Monomer von nicht mehr als 100 ppm, bevorzugt nicht mehr als 50 ppm, besonders bevorzugt nicht mehr als 20 ppm, ganz besonders bevorzugt nicht mehr als 10 ppm und insbesondere nicht mehr als 5 ppm wie beispielsweise weniger als 1 ppm auf.

Ebenso gefunden wurde die Verwendung von peroxidarmem vernetztem Vinyllactam-Polymer erhältlich nach dem erfindungsgemäßen Verfahren oder erfindungsgemäßes peroxidarmes vernetztes Vinyllactam-Polymer als Hilfsmittel oder Wirkstoff im Bereich Kosmetik, Pharma, Tierernährung, Tiergesundheit, Pflanzenschutz, Getränketechnologie, Lebensmitteltechnologie, Wasch- und Reinigungsmittel, Medizintechnik oder technischen Anwendungen. Insbesondere gefunden wurde die Verwendung in pharmazeutischen Formulierungen.

Mittels des erfindungsgemäßen Verfahrens zur Herstellung von peroxidarmem vernetzzten Vinyllactam-Po-lymer können prinzipiell alle Vinyllactam-Homo- und Copolymere hergestellt werden.

Der Begriff "Polymer" umfasst beispielsweise lineare, wasserlöslich vernetzte oder wasserunlöslich vernetzte Polymere. Der Begriff "wasserunlöslich vernetztes Polymer" umfasst auch die sogenannten Popcorn-Polymere, die im Englischen als "proliferous polymers" oder wie bei Polyvinylpyrrolidon auch als "PVPP" bezeichnet werden. Die Herstellung solcher Popcornpolymere erfolgt durch die als "Popcornpolymerisation" oder "proliferierende Polymerisation" bekannte radikalische Polymerisation.

"Vernetzt" meint Polymer, das statistisch gesehen mindestens eine Verzweigungsstelle je Polymerkette aufweist. Ein Polymer kann dabei trotz seiner Verzweigung und unabhängig von der Zahl der Verzweigungsstellen je Polymerkette noch löslich sein in geeigneten Lösemitteln. "Vernetzt" meint insbesondere ein Polymer, das aufgrund der Zahl der Verzweigungsstellen je Polymerkette oder seiner physikalischen Struktur unlöslich ist in allen Lösemitteln.

"Wasserunlöslich" und "unlöslich" bedeutet im Rahmen dieser Erfindung, dass das Polymer bei 20 °C eine Löslichkeit von weniger als 1 Teil Polymer in 100 Teilen Wasser beziehungsweise Lösungsmittel aufweist.

"Polymer" umfasst Homopolymere, Copolymere, Graft-Homo- und Graft-Co-Polymere, die jeweils als löslich-vernetzte oder unlöslich-vernetzte, insbesondere wasserlöslich vernetzte oder wasserunlöslich-vernetzte Polymere vorliegen können.

Die mit dem erfindungsgemäßen Verfahren herstellbaren peroxidarmen vernetzten Vinyllactam-Polymere enthalten neben Vinyllactam weiterhin keines, eines oder mehrere Monomere a), keines, eines oder mehrere Monomere b) sowie keines, eines oder mehrere vernetzende Monomere c). Das heisst, die Polymere sind durch Polymerisation der genannten Monomeren erhalten worden und können noch Restmengen der Monomeren enthalten. Vinyllactam-Polymer kann neben einem Vinyllactam-Homopolymer auch ein Vinyllactam-Copolymer aus zwei oder mehr verschiedenen Vinyllactamen sein.

Geeignete Vinyllactame sind beispielsweise:

N-Vinyllactame wie N-Vinylpyrrolidon ("NVP", "VP"), N-Vinylpiperidon, N-Vinylcaprolactam ("VCap"), deren mit C1 bis C8-Alkyl-Gruppen-substiutierten Derivate wie 3-Methyl-, 4-Methyl-oder 5-Methyl-N-Vinylpyrrolidon.
Bevorzugte Vinyllactame sind N-Vinylpyrrolidon, 3-Methyl-N-vinylpyrrolidon, 4-Methyl-N-vinylpyrrolidon, 5-Methyl-N-vinylpyrrolidon, N-Vinylpiperidon und N-Vinylcaprolactam.
Ganz besonders bevorzugte Vinyllactame sind N-Vinylpyrrolidon und N-Vinylcaprolactam.

Erfindungsgemäße Polymere können Homopolymere aus einem Vinyllactam als auch Copolymere aus mehreren Vinyllactamen sein.
Ein Vinyllactam-Polymer kann daher ein Homo- oder Copolymer sein enthaltend N-Vinyllactame wie N-Vinylpyrrolidon (VP) oder deren an 3, 4- oder 5-Position Methyl-substitutierten Derivate, N-Vinylpiperidon oder N-Vinylcaprolactam (VCap).
Bevorzugtes Vinyllactam ist N-Vinylpyrrolidon, N-Vinylcaprolactam oder deren Mischung. Besonders bevorzugt ist N-Vinylpyrrolidon.
Bevorzugte Vinyllactam-Polymere sind Vinylpyrrolidon-Polymere (Polyvinylpyrrolidone), Vinylpyrrolidon-Copolymere und Vinylpyrrolidon-Popcorn-Polymere.

Geeignete **Monomere a)** sind beispielsweise:

N-Vinylamide wie N-Vinylformamid und dessen nach der Polymerisation durch Hydrolyse erhältliches N-Vinylamin, N-Vinyl-N-methylacetamid.
Amine wie N-Vinyl- oder Allyl-substituierte heterocyclische Verbindungen, bevorzugt N-Vinylpyridin, oder N-Allylpyridin, N-Vinylimidazole, die auch in 2-, 4- oder 5-Position mit C1-C4-Alkyl, insbesondere Methyl- oder Phenyl-Resten substituiert sein können, wie 1-Vinylimidazol, 1-Vinyl-2-methylvinylimidazol sowie deren quaternisierte Analoga wie 3-Methyl-1-vinylimidazoliumchlorid, 3-Methyl-1-vinylimidazoliummethylsulfat, N- C1- bis C24-Alkylsubstituierte Diallylamine oder deren quaternisierte Analoga wie Diallylammoniumchlorid oder Diallyldimethylammoniumchlorid.

Bevorzugte Monomere a) sind Vinylamide wie Vinylformamid sowie das durch Hydrolyse nach der Polymerisation erhältliche Vinylamin, N-Vinylimidazol, 1-Vinyl-3-methylimidazolium Chlorid, 1-Vinyl-3-methylimidazolium Sulfat, sowie Vinylmethylamid.

Ganz besonders bevorzugte Monomere a) sind Vinylformamid sowie das durch Hydrolyse nach der Polymerisation erhältliche Vinylamin sowie N-Vinylimidazol.

Erfindungsgemäße Polymere können Homopolymere aus Vinyllactam als auch Copolymere aus einem Vinyllactam oder mehreren Vinyllactamen sowie Copolymere aus mindestens einem Vinyllactam und mindestens einem Monomer a) sein, beispielsweise Copolymere aus N-Vinylpyrrolidon und N-Vinylimidazol, Copolymere aus N-Vinylpyrrolidon und N-Vinylformamid oder Copolymere aus N-Vinylpyrrolidon und N-Vinylcaprolactam.

Als **Monomere b)** kommen alle in WO 2010/072640 aus Seite 6, Zeile 8 bis Seite 8, Zeile 17 als Monomere b) bezeichneten Monomere in Betracht, auf die hier ausdrücklich Bezug genommen wird.

Bevorzugte Monomere b) sind Maleinsäure, Maleinsäureanhydrid, Isopropylmethacrylamid, Acrylamid, Methacrylamid, 2-Hydroxyethyl(meth)acrylamid und 2-Hydroxyethyl-ethylacrylamid, ferner Vinylester aliphatischer C2-C18-Carbonsäuren wie Vinylacetat sowie der durch Hydrolyse nach der Polymerisation daraus erhältliche Vinylalkohol, Vinylpropionat, Vinylbutyrat, Vinyllaurat, Vinylstearat, Vinylneodecanoat VEOVA 9 und VEOVA 10, ferner Dimethylamino(m)ethyl(meth)acrylat und Dimethylamino(m)ethyl(meth)acrylamid und deren quaternierte Analoga sowie Diallyldimethylammoniumchlorid.

Ganz besonders bevorzugte Monomere b) sind Methacrylamid, Vinylacetat sowie der durch Hydrolyse nach der Polymerisation erhältliche Vinylalkohol, Vinylpropionat, Vinylneodecanoat VEOVA 9 und VEOVA 10, Dimethylaminoethyl(meth)acrylat, Dimethylaminoethyl(meth)acrylamid sowie deren quaternierte Analoga sowie Diallyldimethylammoniumchlorid.

Insbesondere sind Vinylacetat und Vinylalkohol Monomere b) bevorzugt.

Polymere, die Copolymere sind und Monomere b) enthalten, können eines oder mehrere der Monomere b) enthalten. Üblicherweise sind jedoch nicht mehr als fünf verschiedene Monomere b) in einem Copolymer enthalten.

Zu den bevorzugten Polymeren zählen des weiteren Copolymere, die mindestens ein Vinyllactam, mindestens ein Monomer a) und mindestens ein Monomer b) enthalten.

Erfindungsgemäße Polymere können beispielsweise Copolymere aus N-Vinylpyrrolidon und Vinylacetat, Copolymere aus N-Vinylpyrrolidon, Vinylcaprolactam und Vinylacetat oder Copolymere aus N-Vinylcaprolactam und Vinylacetat sein.

Als **vernetzende Monomere c)** ("Vernetzer") kommen beispielsweise die in WO2009/024457 auf Seite 7, Zeile 1 bis Seite 9, Zeile 2 beschriebenen in Betracht, auf die hier ausdrücklich Bezug genommen wird.

Bevorzugt als vernetzende Monomere c) sind Pentaerythrittriallylether, Methylenbis-acrylamid, N,N'-Divinylethylenharnstoff, N,N'-Divinylpropylenharnstoff, Divinylbenzol, Ethyliden-bis-3-(N-vinylpyrrolidon), 1-Vinyl-3-ethylidenpyrrolidon, 3-Vinyl-N-vinylpyrrolidon, 4-Vinyl-N-vinylpyrrolidon, 5-Vinyl-N-vinylpyrrolidon, Allyl(meth)acrylat, Triallylamin, Acrylsäureester von Glykol, Butandiol, Trimethylolpropan und Glycerin, Acrylsäureester von mit Ethylenoxid und/oder Epichlorhydrin umgesetztem Glykol, Butandiol, Trimethylolpropan oder Glycerin sowie Mischungen der vorgenannten Substanzen.

Für die Verwendung zur sogenannten Popcorn-Polymerisation (proliferierende Polymerisation) bevorzugte vernetzende Monomere c) sind N,N'-Divinylethylenharnstoff, Ethyliden-bis-3-(N-vinylpyrrolidon), 1-Vinyl-3-ethylidenpyrrolidon, 3-Vinyl-N-vinylpyrrolidon, 4-Vinyl-N-vinylpyrrolidon, 5-Vinyl-N-vinylpyrrolidon sowie Mischungen der vorgenannten Substanzen, wovon N,N'-Divinylethylenharnstoff besonders bevorzugt ist.

Die Mengenanteile in Gewichtsprozent bezogen auf die Gesamtmasse des Polymeren betragen dabei für Vinyllactame üblicherweise mindestens 20 Gewichtsprozent, bevorzugt mindestens 30 Gewichtsprozent, besonders bevorzugt mindestens 50 Gewichtsprozent, ganz besonders bevorzugt mindestens 60 Gewichtsprozent und insbesondere bis zu 99,999 Gewichtsprozent wie beispielsweise Homopolymere aus 100% eines Vinyllactams und 0,001 Gewichtsprozent Monomer c).

Die Mengenanteile in Gewichtsprozent bezogen auf die Gesamtmasse des Polymeren betragen dabei für Monomere a) üblicherweise bis zu 80 Gewichtsprozent, bevorzugt bis zu 70 Gewichtsprozent, besonders bevorzugt bis zu 50 Gewichtsprozent, ganz besonders bevorzugt bis zu 40 Gewichtsprozent und insbesondere bis zu 20 Gewichtsprozent und sind beispielsweise gar nicht im Polymer vorhanden.

Die Mengenanteile in Gewichtsprozent bezogen auf die Gesamtmasse des Polymeren betragen dabei für Monomere b) üblicherweise bis zu 80 Gewichtsprozent, bevorzugt bis zu 70 Gewichtsprozent, besonders bevorzugt bis zu 50 Gewichtsprozent, ganz besonders bevorzugt bis zu 40 Gewichtsprozent und insbesondere weniger als 5 Gewichtsprozent und sind beispielsweise gar nicht im Polymer vorhanden.

Wenn das Polymer wasserlöslich vernetztes Polymer ist, betragen die Mengenanteile der vernetzenden Monomere c) in Gewichtsprozent bezogen auf die Gesamtmasse des Polymers üblicherweise 0,001 bis 20 Gewichtsprozent, bevorzugt 0,01 bis 10 Gewichtsprozent, besonders bevorzugt 0,05 bis 5 Gewichtsprozent und ganz besonders bevorzugt 0,1 bis 1 Gewichtsprozent.

Wenn das Polymer wasserunlöslich vernetztes Polymer wie etwa ein Popcornpolymer ist, betragen die Mengenanteile der vernetzenden Monomere c) in Gewichtsprozent bezogen auf die Gesamtmasse des Polymers üblicherweise 0,001 bis 10 Gewichtsprozent, bevorzugt 0,01 bis 5 Gewichtsprozent, besonders bevorzugt 0,1 bis 4 Gewichtsprozent und ganz besonders bevorzugt 0,5 bis 2,5 Gewichtsprozent wie beispielweise 1,4 bis 2,3 Gewichtsprozent.

Die Gesamtmengen an Vinyllactam, Monomer a), Monomer b) und Monomer c) addieren sich dabei immer zu 100 Gewichtsprozent bezogen auf das Polymer.

So enthält beispielsweise ein typisches Popcornpolymer Vinyllactam, etwa bei bevorzugtem wasserunlöslich vernetztem Polyvinylpyrrolidon nur Vinylpyrrolidon, im Mengenanteil von 95 bis 99,8 Gewichtsprozent, bevorzugt 97,5 bis 99,5 Gewichtsprozent, sowie ein vernetzendes Monomer c) im Mengenanteil von 0,2 bis 5 Gewichtsprozent, bevorzugt 0,5 bis 2,5 Gewichtsprozent, beispielsweise 98,1 Gewichtsprozent Vinyllactam und 1,9 Gewichtsprozent Monomer c), wobei bei wasserunlöslich vernetztem Polyvinylpyrrolidon N,N'-Divinylethylenharnstoff besonders bevorzugt ist.

Die zur Polymerisation eingesetzten Vinyllactame, Monomere a), b) und c) können unabhängig voneinander ein einzelnes oder Mischungen mehrerer Vinyllactame, Monomerer a), Monomerer b) und/oder Monomerer c) sein, wobei der gemeinsame Mengenanteil der Vinyllactame, Monomere a), b) oder c) den jeweils dafür genannten Mengenanteil für Vinyllactam, Monomer a), für Monomer b) beziehungsweise für Monomer c) am Polymer ergibt.

Vernetzte Polyvinylpyrrolidone sind beispielsweise Polymere mit K-Werten von 10 bis 200, vorzugsweise K15 bis K150, beispielsweise 15, 17, 25, 30, 60, 85, 90, 95, 100, 115 oder K120. Der K-Wert ist ein Maß für die Molmasse und wird bestimmt über die Lösungsviskosität einer wässrigen Lösung mit definierter Polymer-Konzentration (siehe Volker Bühler in "Polyvinylpyrrolidone excipients for the pharmaceutical industry", 9. überarbeitete Auflage, BASF, Seite 26 bis 29). Er ist nur bestimmbar für Polymere, die eine ausreichende Löslichkeit in Wasser aufweisen.

Vernetzte Vinylpyrrolidon-Copolymere sind beispielsweise Copolymere mit N-Vinylcaprolactam (VCap), Vinylacetat (VAc), N-Vinylimidazol (VI) oder deren Mischungen wie Copolymere aus N-Vinylpyrrolidon (VP) und Vinylacetat mit einem Gewichtsverhältnis VP/VAc von 20:80 bis 80:20, beispielsweise 30:70, 50:50, 60:40, 70:30, mit K-Werten von 10 bis 150, vorzugsweise von 15 bis 80 und besonders bevorzugt von 20 bis 50. Besonders bevorzugte Copolymere aus N-Vinylpyrrolidon und Vinylacetat weisen einen K-Wert von 25 bis 60 und ein Gewichtsverhältnis VP zu VAc von 55:45 bis 70:30 auf wie beispielsweise 60:40, 50:50 und 65:35, sowie vernetzte Copolymere aus VP und VI sowie Copolymere aus VP und VCap jeweils mit K-Werten von 15 bis 150, vorzugsweise von 20 bis 100 und insbesondere von 30 bis 90 sowie Gewichtsverhältnissen der Monomere VP zu VI bzw. VP zu VCap von 80:20 bis 20:80, bevorzugt von 70:30 bis 30:70, besonders bevorzugt von 60:40 bis 40:60 und beispielsweise auch 50:50.

Die Herstellung von Vinyllactam-Polymeren durch radikalische Polymerisation auch unter Verwendung von vernetzenden Monomeren ist an sich bekannt. Die Polymerisation liefert dabei vernetzte Polymere, die je nach der Anzahl der Vernetzungsstellen und/oder der physikalischen Struktur (der Anordnung der Polymerketten im Raum) wasserlöslich, in Wasser gelbildend oder in Wasser unlöslich sind.

Die Herstellung von Polyvinylpyrrolidonen kann beispielsweise als Lösungs- beziehungsweise Fällungspolymerisation in einem geeigneten Lösungsmittel wie Wasser, Gemischen aus Wasser und organischen Lösungsmitteln, beispielsweise Ethanol-Wasser oder Isopropanol-Wasser-Gemischen oder in rein organischen Lösungsmitteln wie Methanol, Ethanol oder Isopropanol, erfolgen. Diese Herstellmethoden sind dem Fachmann bekannt.

Bevorzugte wasserunlöslich-vernetzte Polymere sind Polymere aus Vinylpyrrolidon oder aus Vinylpyrrolidon mit Vinylimidazol, Vinylcaprolactam und/oder Vinylacetat, die mittels der sogenannten "Popcorn"-Polymerisation (auch als proliferierende Polymerisation bezeichnet) hergestellt wurden, weshalb die Polymere im Englischen auch als "proliferous polymer" bezeichnet werden. Wasserunlöslich-vernetzte N-Vinylpyrrolidon-Homopolymere werden auch als "PVPP" oder - im Bereich Pharma - als "Crospovidon" bezeichnet.

Popcorn-Polymerisation und -Polymere sind beschrieben etwa bei Barabas in Encyclopedia of Polymer Science and Engineering, Second Edition, Volume 17, 1989, Seite 212 3. Absatz bis Seite 213, 3.Absatz, oder Haaf, Sanner und Straub, Polymer Journal 1985, Vol. 17, Nr. 1, Seiten 143 bis 152;insbesondere auf den Seiten 148 bis 151.

Die zur Herstellung von Popcorn-Polymeren verwendeten Vernetzer entstehen durch einen der eigentlichen Polymerisationsreaktion vorgelagerten Reaktionsschritt in situ oder werden als definierte Verbindung zugesetzt (siehe Haaf et al.). Bei solchen Popcornpolymeren ist demnach eine Bestimmung der Molmasse nicht möglich, weil Popcornpolymere praktisch unlöslich in allen Lösemitteln sind. Alle üblichen Methoden beruhen aber auf einer wenigstens geringen Löslichkeit der Polymere und sind daher ungeeignet für Popcornpolymere.

Die Herstellung von erfindungsgemäß in Betracht kommenden Popcornpolymeren wie insbesondere wasserunlöslich vernetztem Polyvinylpyrrolidon (PVPP) unter Zusatz von Vernetzern ist beispielsweise auch in der EP-A 88964, der EP-A 438 713 oder der WO 2001/068727 beschrieben.

Die Herstellung von Popcornpolymeren wie PVPP durch Generierung von Vernetzern in situ in einem der eigentlichen Popcornpolymerisation vorgelagerten Schritt und deren Polymerisation mit den genannten Monomeren zu vernetzten, wasserunlöslichen Popcornpolymeren ist beispielsweise auch aus der US 3,277,066 oder US 5,286,826 bekannt. Bevorzugt erfolgt dabei eine solche Generierung des Vernetzers aus dem Monomer in Gegenwart einer starken Base. Beide Herstellvarianten sind für die vorliegende Erfindung geeignet und daher erfindungsgemäße Ausführungsformen.

Bevorzugt erfolgt die Herstellung gemäß der vorliegenden Erfindung jedoch nach der erstgenannten Methode unter Zusatz von Vernetzern.

Bevorzugte Popcornpolymere werden erhalten aus in situ hergestelltem Vernetzer sowie N-Vinylpyrrolidon, N-Vinylimidazol, N-Vinylcaprolactam und/oder N-Vinylacetat.

Besonders bevorzugte Popcornpolymere werden erhalten unter Verwendung von Divinylethylenharnstoff als vernetzende Monomere c) sowie N-Vinylpyrrolidon und und/oder N-Vinylcaprolactam als Vinyllactame sowie gegebenenfalls N-Vinylimidazol und/oder N-Vinylacetat als Monomere a).

Die Mengenverhältnisse VP zu VI betragen dabei 0,5:9,5 bis zu 5:5, bevorzugt 1:9. Die Mengenanteile des Vernetzers an den gesamten Monomeren betragen dabei jeweils 0,5 bis 3 Gewichtsprozent, bevorzugt 1,4 bis 2,3 Gewichtsprozent und ganz besonders bevorzugt 1,9 bis 2,1 Gewichtsprozent.

Besonders bevorzugte Popcornpolymere werden erhalten aus N,N'-Divinylethylenharnstoff und N-Vinylpyrrolidon.

Die Mengenanteile des Vernetzers an den gesamten Monomeren betragen dabei jeweils 0,5 bis 3 Gewichtsprozent, bevorzugt 1,4 bis 2,3 Gewichtsprozent und ganz besonders bevorzugt 1,9 bis 2,1 Gewichtsprozent.

Wasserunlöslich vernetzte Polymere (Popcornpolymere) sind auch kommerziell erhältlich, beispielsweise als Kollidon® CL, Kollidon® CL-F oder Kollidon® CL-SF sowie als mikronisiertes Produkt Kollidon® CL-M der Firma BASF SE, oder als Polyplasdone® XL, Polyplasdone® XL-10, Polyplasdone® INF-10, Polyplasdone® Ultra oder Polyplasdone® Ultra-10 der Firma ISP Corp., USA. Weitere bekannte Markennamen sind Divergan® und Polyclar®. Popcornpolymere, die N-Vinylpyrrolidon und N-Vinylimidazol im Gewichtsverhältnis 1:9 enthalten, sind auch kommerziell erhältlich etwa als Divergan® HM der Firma BASF SE.

Die Polymere werden erhalten durch die Polymerisation der genannten Monomeren und können daher noch Restmengen dieser Monomeren enthalten. Übliche Restmengen betragen etwa nicht mehr als 100 ppm eines oder aller Monomere bezogen auf den Polymerfestgehalt.

Nach dem erfindungsgemäßen Verfahren sind daher insbesondere vernetzte Vinylpyrrolidon-Polymere erhältlich. Bevorzugt sind vernetzte Polyvinylpyrrolidone und ganz besonders bevorzugt wasserunlöslich vernetzte Polyvinylpyrrolidone erhältlich, die nicht mehr als 100 ppm, bevorzugt nicht mehr als 50 ppm, besonders bevorzugt nicht mehr als 10 ppm, ganz besonders bevrozugt nicht mehr als 5 ppm und insbesondere nicht mehr als 1 ppm N-Vinylpyrrolidon beziehungsweise Restmonomer je eingesetztem Monomer bezogen auf den Polymerfestgehalt enthalten.

Werden diese Restmengen nicht direkt durch die Polymerisation erhalten, sind dem Fachmann geeignete Maßnahmen bekannt, um die Monomergehalte abzusenken. Übliche und für die Polymere anwendbare Verfahren sind etwa die thermische Destillation, die Wasserdampfdestillation, die Strippung, die Adsorption sowie bei wasserunlöslich vernetzten Polymeren wie Popcornpolymeren auch etwa die Waschung.

Bevorzugt werden die Polymere erhalten ohne die Anwendung solcher Maßnahmen. Bei Popcornpolymeren erfolgt bevorzugt nur die Waschung.

Im Rahmen dieser Erfindung sind von allen oben genannten Vinyllactam-Polymeren ganz besonders bevorzugt wasserunlöslich vernetzte Vinyllactam-Polymere und ganz besonders bevorzugt wasserunlöslich vernetzte Polyvinylpyrrolidon-Polymere wie Polyvinylpyrrolidon-Popcorn-Polymer.

Gemäß der vorliegenden Erfindung besonders bevorzugte Polymere sind demnach wasserunlöslich vernetzte, peroxidarme Vinyllactam-Polymere aus 0,5 bis 2,5 Gew.% N,N'-Divinylethylenharnstoff und 97,5 bis 99,5 Gew.% N-Vinylpyrrolidon, die - jeweils bezogen auf den Polymerfestgehalt - einen Peroxid-Gehalt bestimmt zwei Tage nach Herstellung von nicht mehr als 50 ppm, bevorzugt nicht mehr als 20 ppm und besonders bevorzugt von nicht mehr als 10ppm bezogen und/oder einen Peroxid-Gehalt bestimmt zu einem beliebigen Zeitpunkt innerhalb von bis zu drei Monaten nach Herstellung von nicht mehr als 100 ppm, bevorzugt nicht mehr als 50 ppm und besonders bevorzugt von nicht mehr als 20 ppm wie beispielsweise weniger als 10 ppm oder gar weniger als 5 ppm aufweisen. Der Peroxid-Gehalt wird dabei mittels Iodometrie gemäß Ph.Eur. 6 ermittelt. Ebenso weisen diese Vinyllactam-Polymere - bezogen auf den Polymerfestgehalt - Restmonomergehalte je eingesetztem Monomer von nicht mehr als 100 ppm, bevorzugt nicht mehr als 50 ppm, besonders bevorzugt nicht mehr als 20 ppm, ganz besonders bevorzugt nicht mehr als 10 ppm und insbesondere nicht mehr als 5 ppm wie beispielsweise weniger als 1 ppm auf.

Das erfindungsgemäße Verfahren zur Herstellung von peroxidarmem vernetztem Vinyllactam-Polymer erfolgt nach den bekannten Verfahren mittels radikalischer Polymerisation, wobei jedoch die Polymerisation in Gegenwart von mindestens einer als Antioxidans wirkenden organischen Substanz durchgeführt wird.

Die erfindungsgemäß als Antioxidans wirkende organischen Substanz (im Rahmen dieser Erfindung auch als "Antioxidans" bezeichnet) wird daher vor oder während der Polymerisation mit den Reaktanden (Monomere, gegebenenfalls Vernetzer, Initiatoren usw.) oder direkt in die Reaktionsmischung zugegeben. "Während der Polymerisation" meint dabei, dass wenigstens mehr als 10 Gew.%, bevorzugt mehr als 20 Gew.%, besonders bevorzugt mehr als 30 Gew.% und ganz besonders bevorzugt mehr als 50 Gew.% der Monomere noch nicht polymerisiert sind.

Der Begriff "als Antioxidans wirkende organische Substanz" ("Antioxidans") meint im Rahmen dieser Erfindung eine oder Mischungen mehrerer der dem Fachmann als solche Substanzen bekannten Verbindungen: Solche Substanzen sind dem Fachmann bekannt beispielsweise aus Polymeric Materials Encyclopedia (siehe zuvor), aus der DE10019470 oder der DE-A 10 2005 005 974 sowie WO 2010/072640.

Dieses erfindungsgemäß verwendete Antioxidans ist dem Fachmann daher als solches geläufig. Geeignete Antioxidantien weisen ein Redoxpotential auf und können mit Radikalen reagieren.

Erfindungsgemäß eingesetzte, als Antioxidans wirkende organische Substanz ist eine oder mehrere Substanzen ausgewählt aus phenolischen, bisphenolischen, stickstoff-haltigen, phosphor-haltigen, schwefel-haltigen, alkoholischen, aminischen und gehinderten aminischen, dem Fachmann als Antioxidans bekannten Verbindungen. Von der vorliegenden Erfindung umfasst sind auch alle in der US 6498231 B2 als Antioxidantien genannten Substanzen (Spalte 4, Zeile 36 bis Spalte 6, Zeile 29), auf die hier ausdrücklich Bezug genommen wird.

Die als Antioxidans wirkende organische Substanz ist dabei bevorzugt ausgewählt aus phenolischen, bisphenolischen, stickstoff-haltigen, schwefel-haltigen und alkoholischen, als Antioxidans wirkende organische Substanzen. Besonders bevorzugt sind solche Substanzen ausgewählt aus der Gruppe umfassend Tocopherole, Catechinhydrat, Harnsäure, Nordihydroguajaretsäure, Propyl-3,4,5-trihydroxibenzoat, 4-hydroxy-2,2,6,6-tetramethyl-piperidin-1-oxyl, Tris(tetramethylhydroxypiperidinol)citrat, N-Acetylcystein, Bis(2,2,6,6-tetramethylpiperidin-1-oxyl-4-yl)-decandioat, 2,6-di-tert.butyl-4-methylphenol, 1,2-Dithiolan-3-pentansäure und Salzen der Ascorbinsäure und/oder der Isoascorbinsäure wie Natriumascorbat.

Im Rahmen dieser Erfindung wird der Begriff "Tocopherol" und "Tocopherole" - wenn nicht eindeutig nur die Einzelsubstanz "Tocopherol" gemeint ist - verwendet für eine Gruppe von Substanzen bestehend aus Tocopherol, Strukturisomeren von Tocopherol wie alpha-, beta-, gamma- und delta-Tocopherol, Isomere von Tocopherolen, einzelne als Antioxidans wirkende Substanzen der in Vitamin E vorkommenden Inhaltsstoffe wie die Tocomoneole und die Tocotrienole und deren Isomeren, Vitamin E aus natürlicher oder synthetischer Herstellung, Fraktionen von Vitamin E, sowie Derivate der vorgenannten Substanzen wie Ester, Amide und Ether, etwa Tocopherolacetat und Ester mit Fettsäuren, sowie Mischungen von mehr als einer dieser erfindungsgemäßen verwendeten Substanzen.

"Fraktionen" meint eine Auswahl an Substanzen aus der Gesamtmischung "Vitamin E", die etwa durch übliche Trennmethoden gewonnen wurde, etwa Fraktionierung mittels Fällung, Trennsäulen und ähnliches.

Vitamin E ist nach bekanntem Wissen eine Mischung, die Tocopherol und/oder dessen Isomere enthält: Vitamin E ist ein Sammelbegriff für eine Gruppe von fettlöslichen Substanzen mit antioxidativen und nicht-antioxidativen Wirkungen. Vitamin-E-Formen sind bekannt als Tocopherole, Tocotrienole, Tocomonoeole und MDT ("marine derived tocopherols"). Jede dieser Substanzen ist als acht verschiedene Stereoisomere erhältlich. Häufig wird der Begriff "Vitamin E" fälschlicherweise allein für alpha-Tocopherol verwendet.

Alpha-Tocopherylacetat (Vitamin-E-acetat) ist ein synthetisches Vitamin-E-Derivat und ist ebenfalls in acht Stereoisomeren erhältlich. Kommerziell erhältliches alpha-Tocopherylacetat ist ein Gemisch dieser Isomeren, das meist als "all rac-alpha-Tocopherylacetat" oder früher auch als "DL-alpha-Tocopherylacetat" bezeichnet wird. Darüber hinaus existieren noch drei weitere Derivate (beta, gamma und delta) in jeweils acht Stereoisomeren.

Die eingesetzte Menge an erfindungsgemäß verwendeter Tocopherole kann dabei zwischen 0,01 und 3 Gewichtsprozent betragen. Es werden bevorzugt bis zu 2,5 Gewichtsprozent, besonders bevorzugt bis zu 2 Gewichtsprozent, ganz besonders bevorzugt bis zu 1,25 Gewichtsprozent und insbesondere bis zu 0,75 Gewichtsprozent eingesetzt, jeweils bezogen auf den Polymerfestgehalt. Mindestens werden vorzugsweise 0,025 Gewichtsprozent, besonders bevorzugt mindestens 0,05 Gewichtsprozent, ganz besonders bevorzugt mindestens 0,1 Gewichtsprozent und insbesondere mindestens 0,25 Gewichtsprozent eingesetzt, jeweils bezogen auf den Polymerfestgehalt.

Die eingesetzte Menge an erfindungsgemäß verwendeter als Antioxidans wirkende organische Substanz nicht umfassend die Tocopherole kann zwischen 0,01 und 2 Gewichtsprozent betragen. Es werden bevorzugt bis zu 1,5 Gewichtsprozent, besonders bevorzugt bis zu 1 Gewichtsprozent, ganz besonders bevorzugt bis zu 0,8 Gewichtsprozent und insbesondere bis zu 0,6 Gewichtsprozent eingesetzt, jeweils bezogen auf den Polymerfestgehalt. Mindestens werden vorzugsweise 0,05 Gewichtsprozent, besonders bevorzugt mindestens 0,1 Gewichtsprozent, ganz besonders bevorzugt mindestens 0,2 Gewichtsprozent und insbesondere mindestens 0,4 Gewichtsprozent eingesetzt, jeweils bezogen auf den Polymerfestgehalt.

Die eingesetzte Menge an Anitoxidans bezieht sich dabei jeweils auf den antioxidativ wirkenden Anteil an Substanz, sofern die Substanzen, wie bei Vitamin E, auch nicht-antioxidativ wirkende Anteile enthalten kann.

Welche Anteile an Substanzen dabei antioxidativ wirken und welche nicht, sind dem Fachmann bekannt. Er kann daher leicht feststellen, welche Menge an Antioxidans eingesetzt werden muss, damit der antioxidativ wirkende Anteil den erfindungsgemäßen Mengen entsprechen.

Eingesetzt werden die Substanzen, nicht umfassend die Tocopherole, bevorzugt in Mengen von

b1) 0,05 bis 0,5 Gew.%, bevorzugt 0,075 bis 0,25 Gew.% wie beispielsweise von 0,1 Gew.% von Catechinhydrat, Harnsäure, Nordihydroguajaretsäure, Propyl-3,4,5-trihydroxybenzoat, 4-hydroxy-2,2,6,6-tetramethyl-piperidin-1-oxyl und/oder Tris(tetramethylhydroxypiperidinol)citrat,

b2) 0,05 bis 1 Gew.%, bevorzugt 0,075 bis 0,75 Gew.% wie beispielsweise 0,1 bis 0,5 Gew.% von N-Acetylcystein und/oder Bis(2,2,6,6-tetramethylpiperidin-1-oxyl-4-yl)-decandioat,

b3) 0,1 bis 2 Gew.%, bevorzugt 0,25 bis 1,5 Gew.% wie beispielsweise 0,5 bis 1 Gew.% von 2,6-di-tert.butyl-4-methylphenol,

b4) 0,1 bis 1 Gew.%, bevorzugt 0,25 bis 0,75 Gew.% wie beispielsweise 0,5 Gew.% 1,2-Dithiolan-3-pentansäure, und/oder

b5) 0,05 bis 2 Gew.%, bevorzugt 0,075 bis 1,5 Gew.% wie beispielsweise 0,1 bis 1 Gew.% von Salzen der Ascorbinsäure oder der Isoascorbinsäure wie insbesondere Natriumascorbat, jeweils bezogen auf den Gehalt an polymerisierbarem Monomer.

Bevorzugt werden die Substanzen ausgewählt aus Tocopherolen, Untergruppe b2) und/oder b5). Besonders bevorzugt innerhalb der Untergruppe b2) ist N-Acetylcystein. Bevorzugt aus der Untergruppe b5) sind Metallsalze der Ascorbinsäure oder der Isoascorbinsäure. Besonders bevorzugt ist Natriumascorbat.

Besonders bevorzugt wird als Antioxidans wirkende organische Substanz eine oder mehrere Substanzen ausgewählt aus den Tocopherolen eingesetzt.

Ganz besonders bevorzugt ist Tocopherol, insbesondere alpha-Tocopherol sowie und Mischungen, diese enthaltend, wie Vitamin E und Vitamin E-Acetat.

Das Verfahren zur Herstellung peroxidarmen vernetzten Vinyllactam-Polymers erfolgt nach üblichen Herstellmethoden, üblicherweise in Wasser, organischem Lösemittel oder deren Mischungen, kann aber auch in Abwesenheit von Lösemittel als Massepolymerisation durchgeführt werden.

Typische Vertreter der organischen Lösemittel sind etwa C1- bis C8-Alkohole wie Methanol, Ethanol, n-Propanol, iso-Propanol, Butanol, Glykol, Glyzerin, Diethylether. Bevorzugt wird Methanol, Ethanol und/oder iso-Propanol eingesetzt.

Wasser kann Wasser unterschiedlicher Qualität sein: Wasser technischer Qualität, Wasser natürlich vorkommender Qualität wie Oberflächenwasser, Flusswasser oder Grundwasser sowie gereinigtes Wasser. Gereinigtes ("reines") Wasser kann durch Reinigungsmethoden wie ein-oder mehrfache Destillation, Entsalzung, Diffusion, Adsorption, mittels Ionentauscher sowie Aktivkohle oder anderen Absorbern, mittels eines Filtrationsverfahrens wie Ultrafiltration oder Dialyse gereinigt werden. Als gereinigtes Wasser wird dabei üblicherweise einfach oder mehrfach destilliertes Wasser sowie vollentsalztes Wasser bezeichnet.

Bevorzugt eingesetzt werden organische Lösemittel, Wasser oder deren Mischungen. Ganz besonders bevorzugt ist die Verwendung von überwiegend Wasser, insbesondere von gereinigtem Wasser.

Die erfindungsgemäße Herstellung erfolgt im Falle der löslichen vernetzten Polymere bevorzugt in Lösung, bei wasserlöslichen vernetzten Polymeren besonders bevorzugt in wässriger Lösung. Im Falle der unlöslich vernetzten Polymere wie der Polyvinylpyrrolidon-Popcornpolymere erfolgt die Herstellung in Masse oder als Fällungspolymerisation. Bei der Fällungspolymerisation wird ausgehend von einer wässrigen Lösung oder Dispersion der Monomere eine Polymerdispersion (meist eine Suspension) in Wasser erhalten. Bevorzugt im Falle der wasserunlöslichen vernetzten Polyvinylpyrrolidon-Popcornpolymere ist deren Herstellung mittels Fällungspolymerisation (der "Popcornpolymerisation") in gereinigtem Wasser.

Geeignete Reaktionsbehältnisse sind alle dem Fachmann für solche Reaktionen geeigneten Behältnisse, wie Rührkessel, Rohrreaktoren, Extruder, Kneter oder Wirbelbettreaktoren. Bevorzugt findet die Fällungspolymerisation in Rührkesseln statt. Die Massepolymerisation erfolgt bevorzugt in Rührkesseln oder Knetern.

Geeignete Herstellmethoden für die erfindungsgemäßen Popcornpolymere sind insbesondere in EP1263813 B1 (ganzes Dokument) und DE 19547761 A1 (Seite 2, Zeile 61 bis Seite 3, Zeile 29 und Beispiel 1a) beschrieben, auf die hier ausdrücklich Bezug genommen wird.

Weitere geeignete Herstellvorschriften finden sich in EP-A 88964, EP-A 438 713 oder der WO 2001/068727 sowie der US 3,277,066 und US 5,286,826.

Ebenso möglich und von der vorliegenden Erfindung umfasst ist die Anwendung des aus der EP 1263813 B1 bekannten Verfahrens zur Popcornpolymerisation unter Einstellung der Teil-chengröße der Popcornpolymere mittels Inertgasstrom und/oder Reduktionsmittel, dessen Verfahrensschritte in den Absätzen [0011], [0019] bis [0025] sowie den Beispielen beschrieben werden.

Erfolgt die Durchführung des erfindungsgemäßen Verfahrens analog zu dem in EP 1263813 B1 beschriebenen Verfahren unter Zusatz von Reduktionsmittel zur Teilchengrößeneinstellung, so erfolgt der Zusatz von als Antioxidans wirkende organische Substanz gemäß der vorliegenden Erfindung bevorzugt vor dem Zusatz des Reduktionsmittels. Es kann sich aber auch als vorteilhaft erweisen, erst nach Einsetzen der Popcornpolymerisation Antioxidans zuzusetzen. Dadurch kann bei Verwendung sehr reiner Einsatzstoffe der Start der Polymerisationsreaktion in der Regel beschleunigt werden. Das Einsetzen der Popcornpolymerisation ist leicht erkennbar an der entstehenden Reaktionswärme und/ oder dem sichtbaren Entstehen von unlöslichen Polymerpartikeln.

Die Anwendung dieses aus EP 1263813 B1 bekannten Polymerisationsverfahrens mit Teilchengrößeneinstellung ist eine bevorzugte Ausführungsform der vorliegenden Erfindung.

Als Antioxidans wirkende organische Substanz wird dabei zu den Monomeren und mit diesen zur Reaktionsmischung bzw. direkt der Reaktionsmischung der Popcornpolymerisation zugegeben.

Wird Vernetzer *in situ* generiert wie bei der US 3,277,066 und US 5,286,826, so erfolgt die Zugabe von Antioxidans erst nach Ende dieser Generierungsphase und damit ebenfalls unmittelbar vor Beginn der Popcornpolymerisation oder nach Einsetzen der Popcornpolymerisation.

Die hergestellten Polymerlösungen oder -dispersionen weisen üblicherweise einen Feststoffgehalt von 5 bis 80 Gew.-%, bevorzugt 5 bis 60 Gew.-% auf. Bei Dispersionen beträgt der Feststoffgehalt besonders bevorzugt 5 bis 25 Gew.-% und insbesondere 8 bis 15 Gew.-%.

An die Polymerisation kann sich, muss aber nicht eine Nachpolymerisation anschließen. Zur Nachpolymerisation kann Radikalbildner (Initiator) zugesetzt werden. Alle dem Fachmann bekannten Initiatoren sind prinzipiell geeignet. Für die Nachpolymerisation bei einer Popcornpolymerisation bevorzugt sind wasserlösliche Azoinitiatoren, deren Zerfallsprodukte für die geplante Anwendung des Polymers nicht prohibitiv sind, also beispielsweise keine Trübung, Geruch oder Toxizität hervorrufen.

Es kann auch, gegebenenfalls auch zusätzlich nach einer Nachpolymerisation, eine chemische Nachbehandlung erfolgen wie eine saure oder basische Hydrolyse zur Restmonomerabsenkung. Weiterhin ist eine physikalische Nachbehandlung möglich wie die Destillation, die Wasserdampfdestillation oder die Strippung.

Ganz besonders bevorzugt werden solche Mengen an als Antioxidans wirkende organische Substanz eingesetzt, dass im Polymer nach der Herstellung nur solche Mengen verbleiben, dass der Gesamtaschegehalt (auch Glührückstand genannt) sowie die maximalen Inhaltsmenge an Antioxidans (bei Verwendung mehrerer Substanzen als Antioxidans bezieht sich die jeweilige Inhaltsmenge auf jede einzelne Substanz) die jeweiligen Anforderungen gemäß den "relevanten Vorschriften" erfüllt.

Solche "relevanten Vorschriften" zu den maximalen Aschegehalten und den Inhaltsmengenbegrenzungen für bestimmte Substanzen zu den jeweiligen Polymeren sind dem Fachmann im jeweiligen Anwendungsgebiet bekannt. Im Pharmabereich relevante Vorschriften sind etwa die Europäische Pharmacopöe (Ph.Eur.), die Japanische Pharmacopöe für Excipients (JPE), die US-amerikanische Pharmacopöe (USP) oder das Deutsche Arzneibuch (DAB) in ihrer jeweils aktuellsten gültigen Fassung. Für den Lebensmittelbereich relevante Vorschriften sind etwa die Vorschriften der Food and Drug Administration (FDA) in USA oder das deutsche Lebensmittelrecht.

Der Fachmann im jeweiligen Arbeitsgebiet weiß daher, welche jeweilige Vorschrift für die Anwendung als relevant beachtet werden muss und kann daher ohne weiteres feststellen, welche Obergrenze für den Gesamtaschegehalt und welche Obergrenzen für Substanzen und Substanzklassen existieren und einzuhalten sind.

Im konkreten Fall der Ausübung der vorliegenden Erfindung wird der Fachmann üblicherweise anhand der relevanten Vorschriften zuerst den zulässigen Gesamtaschegehalt und die jeweiligen Obergrenzen für das jeweilige Polymer ermitteln und dann die zulässige Menge an Antioxidans berechnen. Ebenso wird er nach generell bekannten Methoden den tatsächlichen Gesamtaschegehalt und die jeweilige Inhaltsmenge des Polymers ohne die Behandlung bestimmen. Aus der Differenz von Gehalten ohne die Behandlung und den zulässigen Obergrenzen gemäß der relevanten Vorschriften kann der Fachmann ohne weiteres die maximale Zugabemenge an Antioxidans für dieses Polymer berechnen. Üblicherweise wird er für die Zugabemenge einen Sicherheitsabschlag von etwa 5 bis 10 % bezogen auf die maximale Zugabemenge festlegen, um Produktionsschwankungen berücksichtigen zu können. Übliche Schwankungen des Prozesses in der jeweils ausgeübten Ausführung kann der Fachmann einfach bestimmen und daraus den für diesen Prozess sinnvollen Sicherheitsabschlag festlegen.

Erfindungsgemäß kann zu dem peroxidarmen Polymer nach der Polymerisation zusätzlich Reduktionsmittel und/oder weiteres Antioxidans zugegeben werden. Dadurch kann die Stabilität gegenüber Oxidation und/oder weiterer Peroxidbildung nochmals verbessert werden. "Weiteres Antioxidans" kann eine einzelne Verbindung oder eine Mischung mehrerer Antioxidantien sein. Solche Verbindungen werden auch als Radikalfänger bezeichnet und sind im Rahmen dieser Erfindung vom Begriff "weiteres Antioxidans" umfasst.

"Reduktionsmittel" kann eine einzelne Verbindung oder eine Mischung mehrerer Reduktionsmittel sein.

Werden Reduktionsmittel und weiteres Antioxidans eingesetzt, kann diese Zugabe parallel oder sequentiell erfolgen. Bevorzugt erfolgt die Zugabe sequentiell. Besonders bevorzugt erfolgt zuerst der Zugabe von Reduktionsmittel und dann die Zugabe von weiterem Antioxidans.

Reduktionsmittel und/oder weiteres Antioxidans kann dabei in fester Form, dispergiert oder gelöst in einem geeigneten Lösemittel zu dem in Flüssigkeit vorliegendem Polymer gegeben werden. Bevorzugtes Lösemittel ist das gleiche wie die für die Herstellung jeweils verwendete Flüssigkeit. Besonders bevorzugt ist Wasser.

Die Zugabe von Reduktionsmittel und/oder weiterem Antioxidans erfolgt in der Regel bei Temperaturen von 10 bis 100 °C, vorzugsweise 15 bis 80 °C und besonders bevorzugt 20 bis 60°C. Der bevorzugte pH-Bereich für die Zugabe liegt bei 3 bis 11, vorzugsweise 6 bis 10, besonders bevorzugt 7 bis 9.

Bevorzugt erfolgt zuerst die Zugabe von Reduktionsmittel, dann folgt im Allgemeinen eine Wartezeit, zweckmäßigerweise bei erhöhter Temperatur. In dieser Wartezeit wird die Polymerlösung oder -dispersion bei erhöhter Temperatur von 20 bis 90 °C, bevorzugt bei 40 bis 80 °C gehalten und bevorzugt durchmischt. Diese Wartezeit dauert üblicherweise wenige Minuten bis zu mehreren Stunden, bevorzugt wenigstens 5 Minuten, besonders bevorzugt wenigstens 30 Minuten und ganz besonders bevorzugt wenigstens 60 Minuten, üblicherweise jedoch nicht länger als 4 Stunden, bevorzugt nicht länger als 2 Stunden.

Anschließend erfolgt die Zugabe von weiterem Antioxidans und optional eine weitere Wartezeit, bevorzugt ebenfalls unter Durchmischen. Diese weitere Wartezeit nach Zugabe von weiterem Antioxidans dauert üblicherweise wenige Minuten bis zu mehreren Stunden, bevorzugt wenigstens 5 Minuten, besonders bevorzugt wenigstens 15 Minuten und ganz besonders bevorzugt wenigstens 30 Minuten, üblicherweise jedoch nicht mehr als 2 Stunden und bevorzugt nicht mehr als 1 Stunde.

Mit zunehmenden Volumen an Polymerlösung oder -dispersion steigt jeweils die Dauer der Wartezeit. Die genannten Zeitangaben eignen sich bereits für die kommerzielle Produktion im Rührkessel im Maßstab von mehreren Tonnen Polymer.

Eine Anpassung an andere Prozesse ist damit dem Fachmann leicht möglich.

Als Reduktionsmittel eignen sich beispielsweise Schwefeldioxid, schweflige Säure oder Sulfite, bevorzugt Alkali- oder Erdalkalisulfite, beispielsweise Kalium-, Kaliumhydrogen-, Lithium-, Lithiumhydrogen-, Natrium- oder Natriumhydrogen-Sulfit sowie Ammonium- und Ammoniumhydrogen-Sulfit, wobei Natriumsulfit, Natriumhydrogensulfit und Schwefeldioxid besonders bevorzugt sind. Ganz besonders bevorzugt ist Schwefeldioxid als wässrige Lösung.

Soll Reduktionsmittel und/oder weiteres Antioxidans eingesetzt werden, so reichen bereits geringe Mengen aus. Reduktionsmittel kann beispielsweise in Mengen von 0.005 bis 1 Gew.-%, bezogen auf festes Polymer verwendet werden, vorzugsweise mindestens 0.01 Gew.-% und besonders bevorzugt mindestens 0,03 Gew.-%, vorzugsweise bis zu 0.5 Gew.-% und besonders bevorzugt bis zu 0,20 Gew.-%.

Weiteres Antioxidans kann beispielsweise in Mengen von 0.01 bis 1 Gew.-%, bezogen auf festes Polymer, vorzugsweise mindestens 0.03 Gew.-% und besonders bevorzugt mindestens 0,05 Gew.-%, vorzugsweise bis zu 0.5 Gew.-% und besonders bevorzugt bis zu 0,25 Gew.-%, eingesetzt werden.

Geeignetes weiteres Antioxidans, das erfindungsgemäß verwendet werden kann, ist beispielsweise als Antioxidans aus WO2010/072640 bekannt, auf die hier ausdrücklich Bezug genommen wird.

Als weiteres Antioxidans kommen beispielsweise in Betracht: Ascorbinsäure, Erythorbinsäure, Nordihydroguajaretsäure, Ethoxyquin, Bisabolol, Ascorbylpalmitat oder BHT ("Butylhydroxytoluol": 2,6-Di-tertiärbutyl-4-methyl-phenol), Derivate und Salze dieser Substanzen oder Mischungen der vorgenannten Substanzen.

So können beispielsweise Ammonium-, Alkali-, Erdalkali-Salze etwa der Ascorbinsäure wie Ammoniumascorbat, Natriumascorbat oder Magnesiumascorbat oder deren Mischungen verwendet werden. Ebenso eignen sich Ester von beispielsweise Ascorbinsäure mit anorganischen oder organischen Säuren, wie Ascorbylcarbonat, Ascorbylphosphat, Ascorbylsulfat, Ascorbylstearat oder Ascorbylpalmitat, sowie deren Ammonium-, Alkali-, Erdalkali-Salze beispielsweise Natriumascorbylphosphat oder Natriumascorbylpalmitat. Die analogen Verbindungen der Erythorbinsäure sind ebenso einsetzbar. Mischungen aller vorgenannten Verbindungen können ebenfalls verwendet werden.

Bevorzugt eingesetzt werden als weiteres Antioxidans Ascorbinsäure, Erythorbinsäure, Alkali-, Erdalkali- oder Ammonium-Salze dieser Säuren, deren Derivate wie Ester, Ether oder Amide oder Mischungen der vorgenannten Substanzen. Besonders bevorzugt eingesetzt werden Ascorbinsäure oder Erythorbinsäure, ganz besonders bevorzugt nur Ascorbinsäure.

Bei Verwendung von Reduktionsmittel und weiterem Antioxidans werden besonders bevorzugt als Reduktionsmittel Schwefeldioxid und als weiteres Antioxidans Ascorbinsäure und/oder Erythorbinsäure, insbesondere nur Schwefeldioxid und Ascorbinsäure, eingesetzt.

Besonders bevorzugt bei der Nachbehandlung von erfindungsgemäßem wasserunlöslich vernetztem Polymer wie wasserunlöslich vernetztem Polyvinylpyrrolidon ist nur die Zugabe von weiterem Antioxidans, ganz besonders bevorzugt von Ascorbinsäure, ohne Zugabe von Reduktionsmittel.

Die Zugabe von Reduktionsmittel und weiterem Antioxidans erfolgt jeweils vorzugsweise unter Durchmischung wie Rühren. Auch die Durchmischung mittels Einblasen von Gas, etwa eines Schutzgases, oder durch Umpumpen mit und ohne statische Mischer ist möglich ebenso wie Kombinationen mehrerer Methoden zur Durchmischung.

Die Polymerisation sowie gegebenenfalls eine physikalische und/oder chemische Nachbehandlung wie saure Hydrolyse, Strippung, Destillation, Adsorption und/oder Nachbehandlung mit Reduktionsmittel und/oder weiterem Antioxidans erfolgt zweckmässigerweise unter einer Schutzgasatmosphäre. Als Schutzgasatmosphäre bezeichnet wird der vollständige oder teilweise Austausch von Luft durch Inertgase wie etwa Stickstoff, Helium, Argon und/oder Kohlenstoffdioxid oder deren Mischungen. Als Schutzgas (gleichbedeutend mit "Inertgas") kommt vorzugsweise Stickstoff in Betracht. Bevorzugt wird Schutzgas, insbesondere Stickstoff, dergestalt eingesetzt, dass der Sauerstoffgehalt im System kleiner 50.000 ppm, bevorzugt kleiner 20.000 ppm und besonders bevorzugt kleiner 10.000 ppm beträgt. Üblicherweise wird regelmäßig ein Sauerstoffgehalt von weniger als 5000 ppm, bevorzugt weniger als 2000 ppm oder gar weniger als 1000ppm Sauerstoffgehalt erreicht (ppm: bezogen auf das Gasvolumen; 5000 ppm entsprechen 0,5 Vol%). In einer besonders bevorzugten Ausführungsform erfolgt die Herstellung des Polymers unter Stickstoffschutzgasatmosphäre mit weniger als 50.000 ppm, bevorzugt weniger als 5.000 ppm Sauerstoff.

In einer bevorzugten Ausführungsform erfolgt die Nachpolymerisation, die physikalische, chemische oder sonstige Nachbehandlung wie Waschung und/oder die Nachbehandlung mit Reduktionsmittel und/oder weiterem Antioxidans unter Stickstoffschutzgasatmosphäre mit weniger als 50.000 ppm, bevorzugt weniger als 5.000 ppm Sauerstoff.

Wasserunlöslich vernetztes Popcornpolymer wie insbesondere PVPP wird nach der Polymerisation und einer eventuell daran anschließenden Nachbehandlung üblicherweise vom Lösungsmittel abgetrennt, meist durch Filterung. Üblicherweise folgt eine ein- oder mehrmalige Waschung, in der Regel mit gereinigtem Wasser. Anschließend wird meist der Wassergehalt durch etwa Pressen des Polymers verringert.

Das Polymer kann - falls gewünscht - nach Polymerisation und optionaler Nachbehandlung durch Trocknung in festes Polymer, etwa rieselfähiges Pulver, überführt werden. Dem Fachmann sind Methoden zur Trocknung bekannt. Die Trocknung kann beispielsweise durch Sprühtrocknung, Walzentrocknung oder eine andere Warmluft- oder Kontaktwärmetrocknung erfolgen. Auch die Trocknung mittels Vakuumtrocknung oder Gefriertrocknung ist möglich. Alle anderen Methoden zur Trocknung sind prinzipiell ebenfalls geeignet. Trocknungsverfahren unter Sprühen wie Sprühtrocknung und mittels Kontaktflächen wie Walzentrocknung sind bevorzugte Trocknungsverfahren.

Auf die Trocknung kann aber auch verzichtet werden, etwa wenn Polymerlösungen oder - dispersionen gewünscht werden.

Die Trocknung unter Schutzgas ist möglich und verbessert das Ergebnis der Behandlung weiter.

Bevorzugt erfolgt die Trocknung von Polymer, insbesondere von wasserunlöslich vernetztem Vinyllactam-Polymer, mittels warmem Gas, insbesondere mit Schutzgas wie Stickstoff. Besonderer Vorteil der vorliegenden Erfindung ist, dass auch bei Verzicht auf Schutzgas beim Trocknen das Vinyllactam-Polymer eine verbesserte Langzeitstabilität aufweist.

Festes Vinyllactam-Polymer wird üblicherweise direkt nach der Trocknung sowie gegebenenfalls nachgeschalteter Siebschritte in geeignete Verpackungsmaterialien abgefüllt. Prinzipiell können alle Verpackungsmaterialien eingesetzt werden, die für Pharma-, Lebensmittel- oder Kosmetikanwendungen oder für die jeweils angestrebte Anwendung geeignet und zulässig sind. Vorteilhaft sind natürlich für Sauerstoff wenig oder nahezu nicht permeable Materialien. Durch Vermeiden oder Minimieren des Kontakts des Vinyllactam-Polymers mit Sauerstoff während der Lagerung wird die weitere Oxidation des Polymeren nochmals weiter verringert.

Zusätzlich zum gegebenenfalls nachfolgenden Zusatz von Reduktionsmittel und/oder weiterem Antioxidans zum Vinyllactam-Polymer und/oder einer Trocknung unter Schutzgas kann natürlich auch die Verpackung des Vinyllactam-Polymers zusätzlich unter Stickstoff- oder Edelgasbegasung oder mittels Vakuumieren erfolgen. Selbstverständlich verbessert auch die alleinige Verwendung von Inertverpackungsmaterialien, wie insbesondere von für Sauerstoff wenig oder nahezu undurchlässigen Materialien und Folien die Stabilität des Vinyllactam-Polymeren gegen Oxidation und Peroxidaufbau weiter. Ebenso verbessert natürlich die Verpackung unter Schutzgas in solchen Inertverpackungsmaterialien das Ergebnis weiter. Solche Verpackungsmaterialien und Verfahren zur Verpackung sind beispielsweise bekannt aus DE202009000692U1 und WO 2010/072640, auf die hier in vollem Umfang ausdrücklich Bezug genommen wird.

Nach dem erfindungsgemäßen Verfahren erhaltenes oder erhältliches peroxidarmes vernetztes Vinyllactam-Polymer eignet sich besonders vorteilhaft zum Einsatz in pharmazeutischen oder kosmetischen Zubereitungen oder für den Einsatz in der Nahrungs- und Genussmitteltechnologie. Allergische Reaktionen oder sonstige Unverträglichkeiten, wie sie durch Schwermetalle oder Enzyme auftreten können, werden dabei völlig vermieden.

Auch kann das Polymer vorteilhaft, etwa in Verbindung mit Wirkstoffen, im Bereich Landwirtschaft oder Tiermedizin Einsatz finden wie Tiernahrung, Tiergesundheit und Pflanzenschutz. Ebenso vorteilhaft erweist sich das peroxidarme vernetzte Vinyllactam-Polymer für den Einsatz in der Technik, etwa der Medizintechnik wie Dialysemembranen oder sonstigen Substanzen, Vorrichtungen oder Apparaten, die mit dem Körper oder Körperflüssigkeiten in Berührung kommen oder in den Körper gelangen oder eingebracht werden. Vorteilhaft ist ebenso der Einsatz in Anwendungen, die kritisch sind bezüglich Farbe und/oder Geruch, wie Haarkosmetik, Klebstoffe oder Oberflächenbeschichtung, etwa für Papier und durchsichtige Kunststoffe.

Besonders bevorzugt ist die Verwendung von vernetztem Vinyllactam-Polymer in pharmazeutischen Formulierungen. Besonders geeignet ist Vinyllactam-Polymer für feste Dosierformen. Für eine solche Verwendung in pharmazeutischen Formulierungen bevorzugtes Vinyllactam-Polymer ist wasserunlöslich vernetztes Vinylpyrrolidon-Polymer und Vinylpyrrolidon-Vinylacetat-Polymer. Ganz besonders bevorzugt ist wasserunlöslich vernetztes Polyvinylpyrrolidon.

Solche Formulierungen enthalten neben erfindungsgemäßem peroxidarmem vernetztem Vinyllactam-Polymer und Wirkstoff üblicherweise noch weitere dem Fachmann bekannte und übliche Hilfsstoffe wie Bindemittel, Zerfallsförderer, Tablettensprengmittel, Tenside, Geschmacksmaskierer, Gleitmittel, Filmüberzüge, Füllstoffe und/oder Süßstoffe. Als Wirkstoffe sind prinzipiell alle bekannten Wirkstoffe geeignet. Mögliche Wirkstoffe sind beispielsweise in US 2008-0181962 offenbart im Paragraph [0071], ab siebtletzter Zeile bis Ende dieses Paragraphs, auf die hier ausdrücklich Bezug genommen wird.

Prinzipiell sind alle Anwendungsgebiete möglich, beispielsweise die in US 2001-0010825 auf Seite 1, Paragraph [0029], letzte Zeile, bis Paragraph [0074] Ende, genannten sowie die dort genannten exemplarischen Beispiele für Wirkstoffe, auf die hier ebenfalls ausdrücklich Bezug genommen wird.

Angesichts des Stands der Technik war es vollkommen überraschend, dass als Antioxidans wirkende organische Substanz bereits vor und/oder während der radikalischen Polymerisation anwesend sein kann ohne oder ohne nennenswerte Mengen an Nebenprodukt zu generieren. Ebenso überraschend war, dass die radikalische Polymerisation, insbesondere die Popcornpolymerisation, nicht nennenswert behindert oder verzögert wurde. Insbesondere überraschend war, dass die Ausbeuten an Vinyllactam-Polymer, insbesondere Popcornpolymer, praktisch genauso hoch waren wie ohne Zusatz von als Antioxidans wirkender organischer Substanz. Dennoch wurde eine sehr deutliche und insbesondere über einen längeren Zeitraum der Lagerung an Luft stabile Reduzierung der Peroxidgehalte beobachtet.

Als "nennenswerte Mengen" werden im Rahmen dieser Erfindung solche Mengen bezeichnet, die bei der Anwendung des Polymers im jeweiligen Anwendungsgebiet aufgrund der "relevanten Vorschriften" gerade nicht mehr tolerierbar sind. Als "nennenswert behindern" ist im Rahmen dieser Erfindung gemeint, dass die Verzögerung des Starts der Popcornpolymerisation weniger als 30 Minuten, bevorzugt weniger als 15 Minuten, besonders bevorzugt weniger als 10 Minuten beträgt und beispielsweise überhaupt keine messbare Verzögerung auftritt gegenüber einer Polymerisation ohne Zusatz von Antioxidans.

Insbesondere überraschend war, dass die Popcorn-Polymerisation in Gegenwart von als Antioxidans wirkender organischer Substanz überhaupt möglich ist. Dies war insbesondere deshalb unerwartet, da die Popcornpolymerisation nach Ansicht der Fachwelt ohne die Zugabe von Radikal-bildenden Initiatoren spontan aus sich heraus startet. Verunreinigungen der Monomere mit Stabilisatoren (die zur Stabilisierung der Monomere beim Lagern dienen) sind daher bereits in kleinen Mengen ein ernstes Problem bei der Popcornpolymerisation, weshalb Stabilisatoren für die Monomere nach Ansicht der Fachwelt entweder komplett vermieden oder vor der Popcorn-polymerisation möglichst vollständig entfernt werden müssen. Solche üblicherweise als Stabilisatoren für Monomere verwendete Substanzen sind aber typische Antioxidantien, beispielsweise 2,6-Di-tertiär-butyl-4-methyl-phenol und 4-hydroxy-2,2,6,6-tetramethylpiperidin-1-oxyl.

Vollkommen überraschend wurde daher festgestellt, dass die Popcornpolymerisation bei Mengen von 0,01 bis zu 3 Gewichtsprozent an erfindungsgemäß eingesetzter als Antioxidans wirkender organischer Substanz (bezogen auf den Polymerfestgehalt) praktisch ohne jegliche Verzögerung startet.

Ebenso gefunden wurde, dass die erreichbaren Polymerausbeuten beispielsweise an Popcornpolymer, insbesondere an wasserunlöslich vernetztem Vinylpyrrolidon-Polymer wie PVPP, unerwarteterweise genau so hoch sind wie ohne Zusatz von erfindungsgemäß verwendetem Antioxidans, und üblicherweise wenigstens 90, bevorzugt wenigstens 95, besonders bevorzugt wenigstens 98 Gewichtsprozent und ganz besonders bevorzugt wenigstens 99,5 Gewichtsprozent betragen und sogar vollständiger Umsatz, das heißt größer als 99,99 Gewichtsprozent (bezogen jeweils auf die eingesetzten Monomere), erreicht werden kann.

Überraschenderweise hat sich auch gezeigt, dass der Einsatz der aus DE202009000692U1 und WO 2010/072640 bekannten Methoden für die vorliegende Erfindung nicht notwendig ist. Vielmehr weist ein nach dem erfindungsgemäßen Verfahren hergestelltes oder erhältliches peroxidarmesvernetztes Vinyllactam-Polymer eine hervorragende Langzeitstabilisierung gegen den Anstieg des Peroxidgehaltes bei Lagerung auf, auch wenn die Verpackungsmaterialien stärker sauerstoffdurchlässig sind, wenn die Verpackung nicht gegenüber Sauerstoffzutritt dicht ist, und/oder das Vinyllactam-Polymer sich in einer Atmosphäre mit hohem Sauerstoffgehalt von mehr als 2 Vol% bis hin zu normaler Luft und deren bekanntem Sauerstoffgehalt befindet.

Dies zeigt in besonderem Maße die Schutzfunktion der Stabilisierung von Vinyllactam-Polymer als Ergebnis des erfindungsgemäßen Verfahrens zur Herstellung von peroxidarmem vernetztem Vinyllactam-Polymer in Gegenwart von als Antioxidans wirkende organische Substanz im Vergleich zu den bisher bekannten Methoden zur Stabilisierung.

Insbesondere die Stabilität bei Temperaturbelastung sowie die Stabilität in sauerstoffhaltigem Medium werden deutlich verbessert, ohne jedoch die aus dem Stand der Technik bekannten Nachteile der dort genannten Stabilisierungszusätze und -methoden aufzuweisen.

Ein Vorteil des erfindungsgemäßen peroxidarmen vernetzten Vinyllactam-Polymers ist daher seine Stabilität, das heißt, dass sich die Eigenschaften wie Peroxidgehalt, Molmasse, Farbe und/oder Geruch, die es unmittelbar nach der Herstellung aufweist, im Lauf der Zeit kaum verändern. Als Maß für die Qualität des Vinyllactam-Polymeren kann insbesondere die Bestimmung des Peroxidgehaltes dienen. Ferner herangezogen werden können Geruch und/oder Farbe sowie - bei wasserlöslich vernetzten Polymeren - auch Molmasse, K-Wert und Viskosität von Lösungen.

Der Peroxidgehalt im Vinyllactam-Polymer wird dabei bestimmt mittels Iodometrie, mittels Titanyl-Reagenz oder mittels Cer-Reagenz. Die Methoden sind dem Fachmann bekannt beispielsweise aus der Ph.Eur.6. Alle Methoden liefern vergleichbare Ergebnisse.

Erfindungsgemäßes peroxidarmes vernetztes Vinyllactam-Polymer hergestellt oder erhältlich nach dem erfindungsgemäßen Verfahren weist dabei jeweils bezogen auf den Polymerfestgehalt einen Peroxid-Gehalt ermittelt zwei Tage nach Herstellung von nicht mehr als 50 ppm, bevorzugt nicht mehr als 20 ppm und besonders bevorzugt von nicht mehr als 10 ppm auf, und/oder einen Peroxid-Gehalt ermittelt zu einem beliebigen Zeitpunkt innerhalb von bis zu drei Monaten nach Herstellung von nicht mehr als 100 ppm, bevorzugt nicht mehr als 50 ppm, besonders bevorzugt nicht mehr als 20 ppm und ganz besonders bevorzugt nicht mehr als 10 ppm wie beispielsweise nicht mehr als 1 ppm auf, wobei der Peroxidgehalt ermittelt wird mittels Iodometrie nach Ph.Eur.6.

Insbesondere weist ein solches erfindungsgemäßes peroxidarmes vernetztes Vinyllactam-Polymer hergestellt oder erhältlich nach dem erfindungsgemäßen Verfahren Restmonomergehalte - bezogen auf den Polymerfestgehalt - je eingesetztem Monomer von nicht mehr als 100 ppm, bevorzugt nicht mehr als 50 ppm, besonders bevorzugt nicht mehr als 20 ppm, ganz besonders bevorzugt nicht mehr als 10 ppm und insbesondere nicht mehr als 5 ppm wie beispielsweise weniger als 1 ppm, auf.

Der K-Wert (Fikentscher K-Wert; siehe etwa Bühler, "Polyvinylpyrrolidone - Excipient for Pharmaceuticals", Springer, 2005, Seite 40 bis 41) ist ein Maß für die Lösungsviskosität bei definierten Bedingungen. Damit ist er ein direktes Maß für die Molmasse. Verändert sich die Molmasse beispielsweise durch oxidative Prozesse, führt dies zu Molmassenaufbau (führt zur K-Wert-Erhöhung) oder zu Molmassenabbau (führt zur K-Wert-Erniedrigung) und so zu einer Veränderung des K-Werts.

Der Aufbau und Zerfall von Peroxiden im Polymer ist ein solcher oxidativer Prozess.

Damit weist Polymer hergestellt oder erhältlich nach dem erfindungsgemäßen Verfahren auch eine Stabilität des K-Wertes und damit der Molmasse beim Lagern auf. Da die Molmasse und damit der K-Wert direkt mit der Lösungsviskosität verknüpft sind, verändert sich folglich auch die Lösungsviskosität nicht oder nur sehr viel geringer als ohne das erfindungsgemäße Verfahren.

Peroxidarmes wasserlöslich vernetztes Vinyllactam-Polymer hergestellt oder erhältlich nach dem erfindungsgemäßen Verfahren zeigt nach Lagerung bei Raumtemperatur eine K-Wert-Veränderung, bestimmt zu einem, beliebigen Zeitpunkt innerhalb von 3 Monaten nach Herstellung, von üblicherweise weniger als 10%, bevorzugt weniger als 5% und besonders bevorzugt weniger als 2% bezogen auf den Ausgangs-K-Wert des Polymers, wobei der Ausgangs-K-Wert zwei Tage nach Herstellung des Polymers nach Fikentscher bestimmt wird.

Für unlöslich vernetztes Polymer kann wie dem Fachmann bekannt ein solcher K-Wert nicht bestimmt werden und wird daher auch nicht angegeben.

Die Farbe des Polymers ist je nach Anwendung wichtig und soll üblicherweise so gering wie möglich sein, bevorzugt vollständig farblos. Die Farbe kann beispielsweise mittels spektroskopischer Methoden bestimmt und etwa als Hazen-Farbzahl oder Iod-Farbzahl oder als Farbklassifikation nach dem Deutschen Arzneibuch angegeben werden. Die Bestimmung der Farbe nach Hazen etc. ist dem Fachmann geläufig.

Durch die oxidativen Prozesse beim Aufbau und Zerfall von Peroxiden im Polymer entstehen auch farbgebende Komponenten, die die Farbe des Polymeren verändern, üblicherweise verschlechtern, d.h. je nach Farbskala üblicherweise deutlich höhere Farbwerte aufweisen als zuvor.

Durch das erfindungsgemäße Verfahren wird der Peroxidaufbau drastisch vermindert oder gar verhindert und somit auch der Zerfall. Dadurch werden Veränderungen in der Farbe des Polymeren verringert oder gar komplett unterbunden.

Damit erreicht peroxidarmes vernetztes Vinyllactam-Polymer hergestellt oder erhältlich nach

dem erfindungsgemäßen Verfahren auch eine Stabilität der Farbe des Polymeren beim Lagern. Peroxidarmes löslich vernetztes Vinyllactam-Polymer hergestellt oder erhältlich nach dem erfindungsgemäßen Verfahren zeigt daher nach Lagerung bei Raumtemperatur eine Farbzahlerhöhung bei der Hazen-Farbe (auch "Hazen-Farbzahl" oder "Kobalt-Platin-Farbzahl" genannt), bestimmt zu einem beliebigen Zeitpunkt innerhalb von 3 Monaten nach Herstellung, von üblicherweise weniger als 10%, bevorzugt weniger als 5%, besonders bevorzugt weniger als 3% und ganz besonders bevorzugt von 1 % oder weniger bezogen auf den Ausgangs-Farb-Wert, der zwei Tage nach Herstellung bestimmt wird.

Die Farbe nach Hazen ist insbesondere nur für löslich vernetzt Polymere und hier insbesondere für kosmetische Anwendungen wichtig.

Im Pharmabereich wird dagegen die Farbe gemäß den Vorgaben der Arzneibücher und Monografien bestimmt. Die erreichbare Farbe der erfindungsgemäßen Polymere entspricht dabei den Vorgaben aller relevanten Vorschriften in Japan, USA und Europa in der aktuellsten Version von 2010 und kann die Anforderungen sogar deutlich übertreffen, das heißt, eine geringere Farbe als gefordert aufweisen. Dem Fachmann sind diese Anforderungen und die zugehörigen Messmethoden hinlänglich bekannt.

Peroxidarmes unlöslich vernetztes Vinyllactam-Polymer hergestellt oder erhältlich nach dem erfindungsgemäßen Verfahren zeigt daher nach Lagerung bei Raumtemperatur eine Farbzahlerhöhung bei der Farbe gemäß Ph.Eur. 6 bestimmt zu einem beliebigen Zeitpunkt innerhalb von 3 Monaten nach Herstellung, von üblicherweise weniger als 3 Skalenwerte, bevorzugt weniger als 2 Skalenwerte, besonders bevorzugt weniger als 1 Skalenwert und ganz besonders bevorzugt keine Abweichung bezogen auf den Ausgangs-Farb-Wert, der zwei Tage nach Herstellung bestimmt wird.

Der Geruch des Polymers ist je nach Anwendung ebenfalls wichtig. Das Polymer soll keinen schlechten Geruch aufweisen. Ebenso soll kein schlechter Geruch beim Lagern entstehen. Der Geruchs des Polymeren kann beispielsweise durch Headspace-GC-Methoden anhand von Geruchsprofilen oder olfaktorisch bestimmt werden, etwa mit der menschlichen Nase (etwa von dafür ausgebildeten Personen, wie Parfumeuren). Durch oxidative Prozesse im Rahmen des Peroxidaufbaus und -zerfalls entstehen neben farbgebenden auch geruchsbildende Substanzen, die etwa zu einem "muffigen" Geruch führen.

Erfindungsgemäßes peroxidarmes vernetztes Vinyllactam-Polymer hergestellt oder erhältlich nach dem erfindungsgemäßen Verfahren zeigt nur eine sehr verringerte oder praktisch keine Veränderung zu unerwünschten Gerüchen, bestimmt zu einem beliebigen Zeitpunkt innerhalb von 3 Monaten nach Herstellung.

Als "Herstellung" bezeichnet wird das Datum, das üblicherweise von den Herstellern von Polymeren auf der Verpackung des Polymers, normalerweise auf dem Etikett, angegeben wird. Dabei handelt es sich entweder um das tatsächliche Produktionsdatum, also dem Datum, zu dem die Polymerisation und alle nachfolgenden Schritte bis zur verkaufsfähigen Form abgeschlossen waren, oder dem Datum der Abfüllung der verkaufsfähigen Form in die Verkaufsverpackung. Diese Daten liegen normalerweise nur ein bis zwei Tage auseinander.

Unter "Herstellung" wird daher im Sinne der vorliegenden Erfindung der Zeitpunkt 48 Stunden nach Beendigung der Polymerisation Datum verstanden.

Die folgenden Beispiele zeigen exemplarisch und nicht begrenzend die Erfindung.

Beispiele

Die Bestimmung des Peroxid-Gehalts erfolgte bei allen Proben durch die iodometrische Methode gemäß europäischer Pharmacopöe Ausgabe 6 (Ph.Eur. 6). Die Zahlenangaben beziehen sich auf die ppm-Werte (1 ppm entspricht 1 mg Peroxid/ kg Polymer), berechnet und angegeben als Wasserstoffperoxid-Äquivalent.

Messgröße: Peroxid-Gehalt (ausgedrückt in ppm bzw. mg H2O2-Äquivalent /kg Polymer). Meßprinzip: Peroxide werden mit Kaliumiodid reduziert und das dabei entstehende Iod photometrisch bei 500 nm detektiert.

Arbeitsbereich w(H2O2): 6 bis 500 mg/kg (6 bis 500 ppm)

Detektion: UV/VIS-Spektrometer, etwa Modell Lambda 25 der Firma Perkin Elmer

Probenvorbereitung: 1,5 bis 2 g Probe wurden auf 0,1 mg genau eingewogen und in etwa 20 ml eines 1:1-Gemisches aus Trichlormethan und Eisessig gelöst. Zum schnelleren Lösen wurde das Gefäß für etwa 5-10 min in ein Ultraschallbad gestellt werden. Anschließend wurden 0,5 ml gesättigte KI-Lösung zugegeben, bevor dann mit Trichlormethan/ Eisessig auf 25 ml auf gefüllt und die Lösung gut durchmischt wurde. Für den Reagenzienblindwert wurden 24,5 ml des 1:1-Gemisches aus Trichlormethan und Eisessig mit 0,5 ml der gesättigten KI-Lösung versetzt. Nach einer Wartezeit von 5 min, gemessen ab der Zugabe der gesättigten KI-Lösung, erfolgte die Messung gegen den mitgeführten Reagenzienblindwert. Die Messung erfolgte an der Flanke der Bande der Iod-Absorption (mit einem Maximum bei 359nm), weil in diesem Bereich keine Störungen durch die Matrix auftreten.

Messparameter: Wellenlänge: 500 nm; Spalt: 2 nm; Schichtdicke der Lösung: 5 cm; Messtemperatur: 20 bis 25°C. Messgenauigkeit: plus/minus 8 %.

Berechnung:

$$w(H_2O_2) = \frac{E_{5cm} - b}{a} \times \frac{V}{m}$$

| mit | w(H₂O₂) | = Massenanteil an Peroxid in mg/kg (= in ppm) |
|---|---|---|
| | $E_{5cm}$ | = Extinktion bei einer Schichtdicke von 5cm |
| | b | = Ordinatenabschnitt aus der Kalibrierung |
| | a | = Steigung der Regressionsgeraden aus der Kalibrierung |
| | m | = Probeneinwaage in g |
| | V | = Volumen der Probelösung (hier: 25ml) |

Kalibrierung:

Es wurden sechs Kalibrierlösungen nach folgendem Schema hergestellt: Etwa 300 mg 30,2 %ige Wasserstoffperoxid-Lösung wurden in einen 100 ml-Messkolben eingewogen und mit einem 1:1-Gemisch aus Trichlormethan und Eisessig auf 100 ml aufgefüllt. Aus dieser Stammlösung wurden jeweils 0,01 ,0,02, 0,05, 0,1, 0,2 und 0,5 ml mit jeweils ca. 20 ml Trichlormethan/ Eisessig (1:1) versetzt. Anschließend wurden jeweils 0,5ml gesättigte KI-Lösung zugegeben, bevor dann jeweils mit Trichlormethan/ Eisessig auf 25ml aufgefüllt wurde. Man erhielt so sechs Lösungen, die etwa 0,3 bis 18 mg Wasserstoffperoxid pro Liter enthielten. 5 Minuten nach Zugabe des KI-Reagenzes wurden die Lösungen wie oben beschrieben gegen einen mitgeführten Reagenzienblindwert vermessen. Aus den für die Kalibrierlösungen erhaltenen Extinktionen wurde eine Regressionsgerade der Form $E_{5cm}$= a*beta+b berechnet, wobei $E_{5cm}$ die Extinktion bei einer Schichtdicke von 5 cm und beta die Massenkonzentration von Wasserstoffperoxid in den Kalibrierlösungen ist (angegeben in mg/l). Die Berechnung lieferte hier die Funktion $E_{5cm}$=0,0389*beta+0,0013 mit einem Korrelationskoeffizienten von $R^2$=0,9998.

Prozentangaben bedeuten Gew.-%. Angaben in "ppm" beziehen sich auf das Gewicht (1 ppm = 1 mg/kg). Angaben in Gewichtsprozent und ppm beziehen sich jeweils auf festes Polymer (den Polymerfestgehalt), das heißt die Menge an Polymer, die in einer Lösung oder Dispersion oder Suspension vorhanden ist.

Bei allen Beispielen erfolgte die Polymerisation unter Stickstoff (technische Qualität) mit einem Sauerstoffgehalt von etwa 1 bis maximal 5 Vol%. Die weitere Aufarbeitung wie Trocknung sowie die Lagerung erfolgte unter Luft. Die verwendeten Polyethylen (PE)-Flaschen waren für Pulver übliche Schraubdeckel-Flaschen.

Allgemeine Vorschrift 1:

Erfindungsgemäße Herstellung eines wasserunlöslich vernetzten Polyvinylpyrrolidons (PVPP) aus N-Vinylpyrrolidon und N,N'-Divinylethylenharnstoff in Gegenwart von Antioxidans:

In einem 3-Liter-Reaktionsgefäß mit Heizmantel und unten liegendem Auslaufhahn wurden 1600 g destilliertes Wasser, 151,8 g N-Vinylpyrrolidon, 3,52 g N,N'-Divinylethylenharnstoff, 1,52 g DL-alpha-Tocopherol und 1,3 g 5%ige Natronlauge vorgelegt und unter Rühren mit einer Drehzahl von 100 Upm auf 80°C erhitzt, wobei die Lösung während des Erhitzens und der Polymerisation mit Stickstoff durchströmt wurde, der am Boden des Polymerisationsgefäßes in die Reaktionsmischung geleitet wurde. Die Strömungsgeschwindigkeit betrug 12 l/h. Nachdem die Temperatur des Reaktionsgemisches auf 80°C angestiegen war, gab man 0,01 g Natriumdithionit (gelöst in 5 g Wasser) zu. Die Mischung wurde auf 80°C gehalten und fortwährend gerührt. Die Popcornpolymerisation begann nach ca. 30 Minuten und war nach 3 Stunden beendet (erkennbar unter anderem am Abklingen der Reaktionswärme). Die Suspension wurde nun abfiltriert und mit Wasser gewaschen, um Verunreinigungen wie lösliches Polymer und nicht polymerisierte Monomere zu entfernen. Das Polymer wurde bei 80°C im Trockenschrank drei Tage getrocknet. Die Ausbeute an Popcorn-Polymerisat betrug über 95%. Der Peroxid-Gehalt wurde direkt nach der Behandlung sowie nach 3 und 6 Monaten Lagerung in verschlossenen PE-Schraubflaschen bestimmt. Die Ergebnisse sind in der folgenden Tabelle 1 zusammengefasst.

Die weiteren Versuche wurden analog durchgeführt, wobei DL-alpha-Tocopherol jeweils ersetzt wurde durch die in der Tabelle 1 jeweils angegebene Menge an Antioxidans (Menge in Gewichtsprozent jeweils bezogen auf das polymerisierbare Monomer).

Vergleichsbeispiele zur allgemeinen Vorschrift 1:

Die Vergleichsbeispiele zur allgemeinen Vorschrift 1 wurden analog dieser durchgeführt, aber mit den Antioxidantien und Antioxidans-Mengen wie in Tabelle 2 angegeben.

Allgemeine Vorschrift 2 (Vergleichsbeispiele):

Nachträgliche Behandlung eines Polymers mit Antioxidans (Tabelle 3)

Eine frisch hergestellte 8,5%ige Suspension von Crospovidon in Wasser (hergestellt nach der allgemeinen Vorschrift 1 jedoch ohne Zusatz von Antioxidans) wurde bei 50 °C mit unterschiedlichen Mengen verschiedener Antioxidantien (siehe Tabelle 3; Menge an Antioxidans in Gewichtsprozent jeweils bezogen auf das polymerisierbare Monomer) versetzt und die Lösung eine Stunde gerührt. Danach wurde das Crospovidon abfiltriert und im Vakuumtrockenschrank unter Stickstoff bei 60°C für 16 Stunden getrocknet. Das pulverförmige Crospovidon wurde anschließend in PE-Flaschen mit Schraubverschluss abgefüllt. Der Peroxid-Gehalt wurde direkt nach Behandlung sowie nach drei Monaten Lagerung bestimmt. Menge und Art des verwendeten Antioxidans (bezogen auf Polymerfestgehalt) sowie die Ergebnisse sind in der nachstehenden Tabelle 3 aufgelistet.

Verwendete Substanzen:

Prostab 5415: Hersteller: BASF SE
Chemischer Name: Bis(2,2,6,6-tetramethylpiperidin-1-oxyl-4-yl)decandioat
Prostab 5198: Hersteller: BASF SE
Chemische Namen: 4-Hydroxy-Tempo; 4-hydroxy-2,2,6,6-tetramethylpiperidin-1-oxyl
Tinogard Q: Hersteller: BASF SE
Chemischer Name: Tris(tetramethylhydroxypiperidinol)citrat
Vitamin E: Vitamin E-Acetat, Hersteller: BASF SE

Angaben in den Tabellen:

- Beispielsart:

Erfindungsgemäß = "E"

Vergleichsversuch = "V"

- Gew.% Antioxidans: bezogen auf polymerisierbare Monomere
- Ausbeute: in Gew.% an polymerem Feststoff nach Trocknung
- Peroxide in ppm/ Zeitpunkt der Messung: Peroxidgehalte in ppm (bezogen auf Gewicht Polymer fest) zum Zeitpunkt der Messung (2 Tage, 3 Monate oder 6 Monate nach Herstellung des Polymers)
- nb: nicht bestimmt

Tabelle 1: Erfindungsgemäße Antioxidantien und -Mengen

| Beispielart | Gew.% Antioxidanz | Antioxidans | Ausbeute (Gew.%) | Peroxide in ppm; 2 Tage | Peroxide in ppm; 3 Monate | Peroxide in ppm; 6 Monate |
|---|---|---|---|---|---|---|
| V | 0 | Blindwert (Ohne Antioxidans) | 99,1% | 121 | 173 | 221 |
| E | 0,05 | DL- alpha- Tocopherol | 96,5% | 25 | 99 | 75 |
| E | 0,1 | DL- alpha- Tocopherol | 100,0% | <20 | <20 | <20 |
| E | 0,5 | DL- alpha- Tocopherol | 97,9% | <20 | <20 | <20 |
| E | 2 | DL- alpha- Tocopherol | 96,1% | <20 | <20 | nb |
| E | 1 | Vitamin E | 94,8% | <20 | <20 | <20 |
| E | 0,1 | (+) Catechinhydrat | 100,0% | 75 | 80 | nb |
| E | 0,5 | 2,6- Di-tert.-butyl-4-methylphenol | 99,6% | <20 | 48 | 77 |
| E | 1 | 2,6- Di-tert.-butyl-4-methylphenol | 93,7% | 51 | 79 | nb |
| E | 0,1 | Harnsäure | | 25 | 61 | nb |
| E | 0,1 | Na.- Ascorbat | 100,0% | <20 | 52 | 48 |
| E | 1 | Na.- Ascorbat | 97,2% | <20 | <20 | <20 |
| E | 0,1 | N-Acetyl-L-Cystein | 100,0% | 37 | 79 | 100 |
| E | 0,5 | N-Acetyl-L-Cystein | 97,1% | <20 | <20 | 26 |
| E | 0,1 | Nordihydroguajaretsäure | 97,5% | <20 | <20 | <20 |
| E | 0,1 | Propyl-3,4,5-trihydroxy-benzoat | 95,8% | 26 | 43 | 67 |
| E | 0,1 | Prostab 5198 | 100,0% | <20 | <20 | <20 |
| E | 0,1 | Prostab *5415* | 100,0% | <20 | <20 | <20 |
| E | 0,1 | Tinogard Q | 100,0% | <20 | <20 | <20 |
| E | 0,5 | RS- Liponsäure | 96,0% | 80 | 90 | nb |
| E | 0,5 | Prostab *5415* | 90,1% | <20 | <20 | 24 |

Tabelle 2: Nicht erfindungsgemäße Antioxidantien und -Mengen

| Beispielart | Gew.% Antioxidanz | Antioxidans | Ausbeute (Gew.%) | 2 Tage | 3 Monate | 6 Monate |
|---|---|---|---|---|---|---|
| V | 0 | Blindwert (Ohne Antioxidans) | 99,1% | 121 | 173 | 221 |
| V | 5 | DL- alpha- Tocopherol | | nicht gestartet | | |
| V | 0,5 | RS- Liponsäure | 96,0% | 80 | 90 | nb |

(fortgesetzt)

| Beispielart | Gew.% Antioxidanz | Antioxidans | Ausbeute (Gew.%) | 2 Tage | 3 Monate | 6 Monate |
|---|---|---|---|---|---|---|
| V | 0,5 | (+) Catechinhydrat | nicht gestartet | | | |
| V | 0,1 | 2,6- Di-tert.-butyl-4-methylphenol | 96,5% | 100 | 183 | nb |
| V | 0,1 | Ascorbinsäure | 97,4% | 226 | nb | nb |
| V | 0,5 | Ascorbinsäure | nicht gestartet | | | |
| E | 0,1 | Ethoxyquin | 90,8% | 47 | 114 | nb |
| V | 0,5 | Ethoxyquin | nicht gestartet | | | |
| V | 0,5 | Harnsäure | nicht gestartet | | | |
| V | 0,1 | L- Glutathion reduziert | 98,4% | 316 | nb | nb |
| V | 0,5 | L- Glutathion reduziert | 97,7% | 352 | nb | nb |
| V | 1 | L- Glutathion reduziert | nicht gestartet | | | |
| V | 0,5 | Na.- Ascorbat | 91,2% | 256 | nb | nb |
| V | 1 | N-Acetyl-L-Cystein | nicht gestartet | | | |
| V | 0,1 | Natriumsulfit | 97,5% | 122 | 193 | nb |
| V | 0,5 | Natriumsulfit | 95,6% | 95 | 153 | nb |
| V | 1 | Natriumsulfit | 89,5% | 168 | nb | nb |
| V | 0,2 | Nordihydroguajaretsäure | 97,2% | Lösung und Polymer braun | | |
| V | 0,5 | Propyl-3,4,5-trihydroxybenzoat | 80,3% | Lösung gelb | | |
| V | 1 | Propyl-3,4,5-trihydroxybenzoat | nicht gestartet | | | |
| V | 0,5 | Prostab 5198 | nicht gestartet | | | |
| V | 0,1 | Rapsöl | 98,0% | 146 | nb | nb |
| V | 0,5 | Rapsöl | 100,0% | 84 | 160 | nb |
| V | 1 | Rapsöl | 100,0% | 207 | nb | nb |
| V | 0,1 | RS-Liponsäure | 95,7% | 334 | nb | nb |
| V | 1 | RS-Liponsäure | nicht gestartet | | | |
| V | 0,01 | Tinogard Q | 91,4% | 168 | nb | nb |
| V | 0,5 | Tinogard Q | nicht gestartet | | | |
| V | 1 | Tinogard Q | nicht gestartet | | | |
| V | 0,1 | Vitamin Q 10 | 99,0% | 172 | nb | nb |
| V | 0,5 | Vitamin Q 10 | 100,0% | 122 | nb | nb |
| V | 1 | Vitamin Q 10 | 95,4% | Pulver ist gelb | | |

Tabelle 3: Nachträgliche Zugabe von Antioxidanz zum fertigen Polymer

| Beispielart | Gew% Antioxidans | Antioxidans | Ausbeute (Gew.%) | 2 Tage | 3 Monate | 6 Monate |
|---|---|---|---|---|---|---|
| V | 0 | Blindwert (kein Antioxidans) | 99,1% | 121 ppm | 173 ppm | 221ppm |
| V | 0,1 | Natrium-Ascorbat | 99,1% | 111 | 298 | nb |

(fortgesetzt)

| Beispielart | Gew% Antioxidans | Antioxidans | Ausbeute (Gew.%) | 2 Tage | 3 Monate | 6 Monate |
|---|---|---|---|---|---|---|
| V | 0,1 | Natrium-Ascorbat | 99,1% | 111 | 298 | nb |
| V | 0,1 | Natrium-Ascorbat | 99,1% | 111 | 298 | nb |
| V | 0,1 | Vitamin E | 99,1% | 151 | 351 | nb |
| V | 0,1 | Vitamin E | 99,1% | 151 | 349 | nb |
| V | 0,1 | Vitamin E | 99,1% | 151 | 360 | nb |
| V | 0,1 | Tinogard Q | 99,1% | 306 | 387 | nb |
| V | 0,1 | Rapsöl | 99,1% | 337 | 483 | nb |
| V | 0,1 | 2,6- Di-tert.-butyl-4-methylphenol | 99,1% | 79 | 264 | nb |
| V | 0,1 | Propyl-3,4,5-trihydroxy-benzoat | 99,1% | 433 | nb | nb |
| V | 0,1 | N- Acetyl- L- Cystein | 99,1% | 150 | 395 | nb |
| V | 0,1 | Prostab 5198 | 99,1% | 264 | 387 | nb |
| V | 0,1 | Prostab 5415 | 99,1% | 273 | 389 | nb |

**Patentansprüche**

1. Verfahren zur Herstellung von peroxidarmem, vernetztem Vinyllactam-Polymer durch radikalische Polymerisation, **dadurch gekennzeichnet, dass** die Polymerisation in Gegenwart von mindestens einer als Antioxidans wirkenden organischen Substanz durchgeführt wird und Vernetzer bei der Polymerisation zugegen ist, wobei der Vernetzer in einem der Polymerisation vorgelagerten Schritt erzeugt oder zur Polymerisation zugegeben wird und das Vinyllactam Polymer mittels proliferierender Polymerisation hergestellt wird.

2. Verfahren nach Anspruch 1, wobei der Vernetzer in einem der Polymerisation vorgelagerten Schritt aus Vinylpyrrolidon in Gegenwart einer starken Base erzeugt wird.

3. Verfahren nach Anspruch 1 oder 2, wobei das Vinyllactam-Polymer wasserunlöslich vernetztes Polyvinylpyrrolidon (PVPP) ist.

4. Verfahren nach Anspruch 1 oder 2, wobei das Vinyllactam-Polymer wasserunlöslich vernetztes Vinylpyrrolidon-Copolymer mit Vinylimidazol, Vinylcaprolactam und/oder Vinylacetat ist.

5. Verfahren nach einem der Ansprüche 1 bis 4, wobei der Vernetzer N,N'-Divinylethylenharnstoff ist.

6. Verfahren nach einem der Ansprüche 1 bis 5, wobei die Polymerisation in wässrigem Medium oder als Massepolymerisation durchgeführt wird.

7. Verfahren nach einem der Ansprüche 1 bis 6, wobei eine oder mehrere als Antioxidans wirkende organische Substanzen ausgewählt sind aus der Gruppe bestehend aus Tocopherolen, Catechinhydrat, Harnsäure, Nordihydroguajaretsäure, Propyl-3,4,5-trihydroxibenzoat, 4-hydroxy-2,2,6,6-tetramethylpiperidin-1-oxyl, Tris(tetramethylhydroxypiperidinol)citrat, N-Acetylcystein, Bis(2,2,6,6-tetramethylpiperidin-1-oxyl-4-yl)-decandioat, 2,6-di-tert.butyl-4-methylphenol, Salze der Ascorbinsäure, Salze der Isoascorbinsäure und 1,2-Dithiolan-3-pentansäure.

8. Verfahren nach Anspruch 7, wobei das oder die Antioxidantien ausgewählt sind aus der Gruppe der Tocopherole.

9. Verfahren nach Anspruch 7, wobei das oder die Antioxidantien ausgewählt sind aus Salzen der Ascorbinsäure und Salzen der Isoascorbinsäure.

10. Verfahren nach einem der Ansprüche 1 bis 9, wobei das Vinyllactam-Polymer in Verfahrensschritten nach der Polymerisation zuerst mit Reduktionsmittel behandelt und anschließend mit weiterem Antioxidans versetzt oder nur mit Reduktionsmittel behandelt oder nur mit weiterem Antioxidans versetzt wird.

11. Verfahren nach einem der Ansprüche 1 bis 10, **dadurch gekennzeichnet, dass** das Vinyllactam-Polymer anschließend durch Trocknung in pulverförmiges Polymer überführt wird.

12. Verfahren nach einem der Ansprüche 1 bis 11, **dadurch gekennzeichnet, dass** die Teilchengrößenverteilung des wasserunlöslich vernetzten Vinyllactam-Polymers eingestellt wird durch Einleiten von Schutzgas und/oder durch Zusatz eines Sauerstofffängers auf mittlere Teilchengrößen im Bereich von 1 bis 1000 $\mu$m.

**Claims**

1. A process for the preparation of low-peroxide, crosslinked vinyllactam polymer by free-radical polymerization, wherein the polymerization is carried out in the presence of at least one organic substance acting as antioxidant, and crosslinker is present during the polymerization, where the crosslinker is produced in a step prior to the polymerization or is added to the polymerization, and the vinyllactam polymer is prepared by means of proliferous polymerization.

2. The process according to claim 1, where the crosslinker is produced in a step prior to the polymerization from vinylpyrrolidone in the presence of a strong base.

3. The process according to claim 1 or 2, where the vinyllactam polymer is water-insolubly crosslinked polyvinylpyrrolidone (PVPP).

4. The process according to claim 1 or 2, where the vinyllactam polymer is water-insolubly crosslinked vinylpyrrolidone copolymer with vinylimidazole, vinylcaprolactam and/or vinyl acetate.

5. The process according to any one of claims 1 to 4, where the crosslinker is N,N'-divinylethylene urea.

6. The process according to any one of claims 1 to 5, where the polymerization is carried out in aqueous medium or as bulk polymerization.

7. The process according to any one of claims 1 to 6, where one or more organic substances acting as antioxidant are selected from the group consisting of tocopherols, catechin hydrate, uric acid, nordihydroguaiaretic acid, propyl 3,4,5-tri-hydroxybenzoate, 4-hydroxy-2,2,6,6-tetramethyl-piperidin-1-oxyl, tris(tetramethylhydroxy-piperidinol) citrate, N-acetylcysteine, bis(2,2,6,6-tetramethylpiperidin-1-oxyl-4-yl)-decanedioate, 2,6-di-tert-butyl-4-methylphenol, salts of ascorbic acid, salts of isoascorbic acid and 1,2-diothiolane-3-pentanoic acid.

8. The process according to claim 7, where the antioxidant or the antioxidants are selected from the group of tocopherols.

9. The process according to claim 7, where the antioxidant or the antioxidants are selected from salts of ascorbic acid and salts of isoascorbic acid.

10. A process according to any one of claims 1 to 9, where the vinyllactam polymer, in process steps after the polymerization, is firstly treated with reducing agents and then admixed with a further antioxidant or is treated only with reducing agents or is admixed only with a further antioxidant.

11. A process according to any one of claims 1 to 10, wherein the vinyllactam polymer is then converted to pulverulent polymer by drying.

12. The process according to any one of claims 1 to 11, wherein the particle size distribution of the water-insolubly crosslinked vinyllactam polymer is adjusted to average particle sizes in the range from 1 to 1000 $\mu$m by introducing protective gas and/or by adding an oxygen scavenger.

**Revendications**

1. Procédé de fabrication d'un polymère de vinyllactame réticulé pauvre en peroxyde par polymérisation radicalaire, **caractérisé en ce que** la polymérisation est réalisée en présence d'au moins une substance organique agissant en tant qu'antioxydant et un agent de réticulation est ajouté lors de la polymérisation, l'agent de réticulation étant formé dans une étape en amont de la polymérisation ou ajouté à la polymérisation, et le polymère de vinyllactame étant fabriqué par polymérisation par prolifération.

2. Procédé selon la revendication 1, dans lequel l'agent de réticulation est formé dans une étape en amont de la polymérisation à partir de vinylpyrrolidone en présence d'une base forte.

3. Procédé selon la revendication 1 ou 2, dans lequel le polymère de vinyllactame est la polyvinylpyrrolidone réticulée insoluble dans l'eau (PVPP).

4. Procédé selon la revendication 1 ou 2, dans lequel le polymère de vinyllactame est un copolymère de vinylpyrrolidone réticulé insoluble dans l'eau avec du vinylimidazole, du vinylcaprolactame et/ou de l'acétate de vinyle.

5. Procédé selon l'une quelconque des revendications 1 à 4, dans lequel l'agent de réticulation est la N,N'-divinyléthylène-urée.

6. Procédé selon l'une quelconque des revendications 1 à 5, dans lequel la polymérisation est réalisée dans un milieu aqueux ou sous la forme d'une polymérisation en masse.

7. Procédé selon l'une quelconque des revendications 1 à 6, dans lequel une ou plusieurs substances organiques agissant en tant qu'antioxydant sont choisies dans le groupe constitué par les tocophérols, l'hydrate de catéchine, l'acide urique, l'acide nordihydroguajarétique, le 3,4,5-trihydroxybenzoate de propyle, le 4-hydroxy-2,2,6,6-tétraméthylpipéridin-1-oxyle, le citrate de tris(tétraméthylhydroxypipéridinol), la N-acétylcystéine, le dioate de bis(2,2,6,6-tétraméthylpipéridin-1-oxyl-4-yl)-décane, le 2,6-di-tert.butyl-4-méthylphénol, les sels de l'acide ascorbique, les sels de l'acide isoascorbique et l'acide 1,2-dithiolane-3-pentanoïque.

8. Procédé selon la revendication 7, dans lequel le ou les antioxydants sont choisis dans le groupe des tocophérols.

9. Procédé selon la revendication 7, dans lequel le ou les antioxydants sont choisis parmi les sels de l'acide ascorbique et les sels de l'acide isoascorbique.

10. Procédé selon l'une quelconque des revendications 1 à 9, dans lequel, dans des étapes de procédé après la polymérisation, le polymère de vinyllactame est tout d'abord traité avec un réducteur, puis mélangé avec davantage d'antioxydant, ou uniquement traité avec un réducteur ou uniquement mélangé avec davantage d'antioxydant.

11. Procédé selon l'une quelconque des revendications 1 à 10, **caractérisé en ce que** le polymère de vinyllactame est ensuite transformé en un polymère en poudre par séchage.

12. Procédé selon l'une quelconque des revendications 1 à 11, **caractérisé en ce que** la distribution de tailles de particules du polymère de vinyllactame réticulé insoluble dans l'eau est ajustée par introduction d'un gaz protecteur et/ou par ajout d'un capteur d'oxygène à des tailles de particules moyennes dans la plage allant de 1 à 1 000 µm.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 873130 B
- US 6331333 B
- US 6498231 B2
- EP 1263813 B1
- US 2821519 A
- EP 1083884 B
- GB 836831 A
- DE 102005005974 A
- WO 2010072640 A
- DE 10019470
- US 7786233 B2
- WO 2009024457 A
- EP 88964 A
- EP 438713 A
- WO 2001068727 A
- US 3277066 A
- US 5286826 A
- DE 19547761 A1
- DE 202009000692 U1
- US 20080181962 A
- US 20010010825 A

**In der Beschreibung aufgeführte Nicht-Patentliteratur**

- **KLINE.** *Modern Plastics,* November 1945, 157
- **PENICHE et al.** *Journal of Applied Polymer Science,* 1993, vol. 50, 485-493
- **ENCINA et al.** *Journal of Polymer Science: Polymer Letters,* vol. 18, 757-760
- **R.E.KING III.** *Antioxidants (Overview)*
- **S. AL-MALAIKA.** *Antioxidants and Stabilizers*
- *Polymeric Materials Encyclopedia,* 1996, vol. 1
- **VOLKER BÜHLER.** Polyvinylpyrrolidone excipients for the pharmaceutical industry. *BASF,* vol. 9, 26-29
- Encyclopedia of Polymer Science and Engineering. 1989, vol. 17, 212-3
- **HAAF ; SANNER ; STRAUB.** *Polymer Journal,* 1985, vol. 17 (1), 143-152
- **BÜHLER.** Polyvinylpyrrolidone - Excipient for Pharmaceuticals. Springer, 2005, 40-41